# EUROPEAN PATENT SPECIFICATION

(11) **EP 4 350 148 B1**
(45) Date of publication and mention of the grant of the patent: **15.04.2026**
(21) Application number: 23182942.5
(22) Date of filing: 03.07.2023
(51) Int. Cl.: F04D 17/16, F04D 29/059, F04D 29/58

(54) **FAN MOTOR**
LÜFTERMOTOR
MOTEUR DE VENTILATEUR

(30) Priority: 05.10.2022 KR 20220127282
(43) Date of publication of application: 10.04.2024
(73) Proprietor: LG Electronics Inc., Yeongdeungpo-gu Seoul 07336 (KR)
(72) Inventor: KIM, Sunggi, 08592 Seoul (KR); KIM, Byungjik, 08592 Seoul (KR); HWANG, Eunji, 08592 Seoul (KR); HWANG, Jisu, 08592 Seoul (KR)
(74) Representative: Vossius & Partner Patentanwälte Rechtsanwälte mbB

(56) References cited:
- KR-B1- 101 278 302
- US-A- 3 252 020
- US-A- 5 375 651

## Description

### TECHNICAL FIELD

The present disclosure relates to a fan motor, and more particularly, to a fan motor capable of cooling a bearing using convection or conduction.

### BACKGROUND

Electric motors may be installed in home appliances such as cleaners, hair dryers, and the like.

A cleaner or a hair dryer may generate rotational force by using an electric motor as a power source.

For example, an electric motor may be fastened to a fan. The fan may generate airflow by being rotated as driving force is applied from the electric motor.

A handy stick cleaner or a hair dryer is operated while a user directly holds it by hand.

In order to enhance user portability and convenience, there is a need to reduce size and weight of a cleaner or a hair dryer.

In order to reduce a weight of a fan motor of a cleaner, it is preferable to use a plastic material, instead of a metal material, as a material for producing a housing.

However, in the case of the plastic material, a heat transfer coefficient (thermal conductivity) is lowered to 1/10 to 1/35 compared to an existing metal material. The housing that is made of the plastic material to surround a bearing hinders heat dissipation of the bearing.

As a result, in the bearing housing made of the plastic material, a temperature of the bearing is increased by 25°C or more, compared to a bearing housing made of a metal material, thereby shortening the lifespan of the bearing and reducing reliability of the fan motor.

Prior Patent Document KR 10-2016-0003745 A (January 11, 2016; hereinafter, referred to as "Patent Document 1") discloses a compressor. The compressor includes a rotor assembly, a stator assembly, and a heat sink assembly.

The rotor assembly includes a shaft to which a bearing assembly and a rotor core are fixed.

The heat sink assembly is fixed to the bearing assembly and stator assembly. The heat sink assembly includes a heat sink having a plurality of legs extending radially outward. The stator assembly is fixed to the plurality of legs.

According to this configuration, the plurality of legs can expand a contact area with air flowing inside a motor housing to dissipate heat generated in the bearing assembly.

However, according to Patent Document 1, the plurality of legs are fixed to the stator assembly, which causes a limit to dissipating heat generated in a bearing into the air through the plurality of legs.

Prior Art Patent Document US 2022/0094237 A1 (March 24, 2022; hereinafter, referred to as Patent Document 2) discloses an electric motor having a heat dissipation structure for a bearing.

A bearing housing accommodates the bearing. A can is brought into contact with an outer ring of the bearing to serve as a heat sink for dissipating heat of the bearing. This enlarges a heat dissipation area, thereby cooling the bearing.

According to this configuration, heat of a ball bearing generated during an operation of the motor is discharged to outside of a motor casing and a casing cover through the can and the ball bearing housing.

However, according to Patent Document 2, since the can is completely surrounded by the motor casing and the casing cover and is fixed to the motor casing and the bearing housing, there is a limit to efficiently dissipating heat of the bearing.

In addition, although the heat dissipation area of the bearing is enlarged, problems such as an increase in a weight of a fan motor and an increase in a manufacturing cost due to a complicated structure are caused.

Prior Patent Document KR 10-1464705 B1 (November 18, 2022; hereinafter, referred to as Patent Document 3) discloses a blower motor having an air-cooling structure for a bearing.

The blower motor includes a bearing part supporting a rotational shaft, a bearing housing accommodating the bearing part, a plurality of inner passage pipes disposed inside the bearing housing, an outer passage pipe connecting an outer circumferential surface of the bearing housing and the outside of the housing to communicate with each other, and a cooling fan injecting cooling air into the housing.

According to this configuration, the inner passage pipes may allow heat generated in the bearing part to move into the bearing housing such that the heat can be discharged externally through an outlet formed through the housing. In addition, the outer passage pipe may allow heat of the bearing part to be discharged to outside of the housing.

However, according to Patent Document 3, the inner passage pipes, the outlet, the outer passage pipe, and the cooling fan make structures of the bearing housing and the housing complicated.

In addition, the components for heat dissipation of the bearing increase the size and weight of the fan motor. This causes a difficulty in applying those components to a small motor such as a vacuum cleaner fan motor and an increase in manufacturing cost for forming passages.

KR 101 278 302 B1 discloses blower with a cooling unit for simulating high-temperature and cryogenic environments is provided to prevent the fluid heat of a scroll from being transferred to a motor by inserting a heat barrier between a motor housing and the scroll.

### SUMMARY

The present disclosure has been invented to provide a fan motor having a structure capable of solving the above problems. The present invention is defined in the appended claims.

A first aspect is to provide a fan motor having a structure that is capable of cooling a bearing while using a plastic bearing housing.

A second aspect is to provide a fan motor having a structure capable of improving bearing cooling performance.

A third aspect is to provide a fan motor having a simple structure while greatly expanding a heat dissipation area of a bearing.

A fourth aspect is to provide a fan motor capable of greatly contributing to decreasing size and weight, and reducing a manufacturing cost.

A fifth aspect is to provide a fan motor having an easy-to-assemble structure.

As a result of intensive research, the inventors of the present disclosure can achieve solution to the problems of the present disclosure and the aforementioned first to fifth aspects by the following embodiments of the present disclosure.
(1) In order to achieve the first aspect, a fan motor according to the invention includes:
   a rotational shaft on which an impeller is mounted; a motor unit including a rotor connected to the rotational shaft and a stator enclosing the rotor, and driving the rotational shaft; a bearing supporting the rotational shaft; a bearing housing enclosing the bearing; and a heat dissipation fin disposed to face one axial side surface of the bearing and mounted on the rotational shaft, and the heat dissipation fin may include a rotating blade configured to rotate centering on the rotational shaft to blow air to the bearing. Accordingly, the heat dissipation fin may cool the bearing by causing convection through rotation of the rotating blade.

In order to achieve the second aspect, the heat dissipation fin may be formed of a metal material. According to this, since a heat transfer coefficient of the heat dissipation fin made of the metal material is much higher than that of a plastic material, cooling performance of the bearing can be improved even when a plastic housing is used to reduce a weight of the fan motor.
the bearing housing may be made of a plastic material. This can result in reducing a weight of the fan motor.
(2) In order to achieve the second and third aspects, in the item (1), the heat dissipation fin may include a ring portion enclosing the rotational shaft and coupled to the rotational shaft, and the rotating blade provided in plurality disposed along an outer circumferential surface of the ring portion. With the configuration, the ring portion may connect the rotational shaft and the plurality of rotating blades, and thus the plurality of rotating blades can rotate in conjunction with the rotational shaft.
(3) In the item (1), the heat dissipation fin may include a ring portion enclosing the rotational shaft and coupled to the rotational shaft, a connection portion protruding in a radial direction from one axial end portion of the ring portion, and the rotating blade provided in plurality on an outer circumferential surface of the connection portion to be spaced apart from one another According to this, the connection portion may connect the ring portion and the plurality of rotating blades, and thus the plurality of rotating blades can rotate in conjunction with the rotational shaft.
(4) In the item (1), the rotating blades may be inclined at a preset angle with respect to an axial direction. Accordingly, air around the heat dissipation fin can move toward the bearing in one direction by the rotation of the rotating blades.
(5) In the item (1), the rotating blades may protrude outward in a radial direction of the rotational shaft. According to this, the rotating blades can rotate air around the rotational shaft.
(6) In the item (1), the rotating blade may be formed in a curved shape having a preset curvature along a circumferential direction and an axial direction of the rotational shaft. This can minimize flow resistance of air passing along a curved surface of the rotating blade.
(7) In order to achieve the fifth aspect, in the item (1) according to the invention, the heat dissipation fir is disposed to be in contact with one axial side surface of the bearing. With the configuration, the heat dissipation fin may restrict an axial movement of the bearing, thereby determining a position of the bearing.
   the ring portion may be disposed to be in contact with the one axial side surface of the bearing. According to this, the ring portion may restrict an axial movement of the bearing, thereby determining a position of the bearing.
(8) In order to achieve the first to third aspects, in the item (1), the heat dissipation fin may include a flexure plate configured to rotate centering on the rotational shaft. According to this, the heat dissipation fin may cool the bearing by using convection and conduction.
(9) In order to achieve the third aspect, in the item (8), the heat dissipation fin may include a ring portion enclosing the rotational shaft and coupled to the rotational shaft, and the flexure plate protruding radially from an outer circumferential surface of the ring portion and extending in a circumferential direction. With the configuration, the ring portion can interlock the flexure plate and the rotational shaft and rotatably support the flexure plate.

In order to achieve the third and fourth aspects, the flexure plate may include convex portions and concave portions that are opposite to each other in direction of curvature. According to this, the flexure plate can effectively expand a heat dissipation area while a structure thereof is simplified.
the convex portions and the concave portions may be alternately disposed along the circumferential direction of the flexure plate. According to this, the convex portions and the concave portions can induce rotational flows of air around the flexure plate.
(10) In the item (9), the ring portion may protrude axially from one axial side surface of the flexure plate, the convex portion may be convex in a protruding direction of the ring portion, and the concave portion may be concave opposite to the protruding direction of the ring portion.

In order to achieve the fifth aspect, the ring portion may be disposed to be in contact with the one axial side surface of the bearing. According to this, the ring portion may determine the position of the bearing, thereby facilitating assembling of the bearing.
(11) In order to achieve the fourth aspect, in the item (8), the flexure plate may include a plurality of flow holes formed therethrough in an axial direction. According to this, the flow holes may allow air to flow through the flexure plate to move to the bearing.
(12) In order to achieve the first to fifth aspects, in the item (1) or (11), the bearing may be provided in plurality to support both sides of the rotational shaft with the rotor interposed therebetween, and the heat dissipation fin may be provided in plurality, including: a first heat dissipation fin disposed at one axial side of a first bearing, adjacent to the impeller, of the plurality of bearings; and a second heat dissipation fin disposed at one axial side of a second bearing, spaced apart from the first bearing in an opposite direction to the impeller, of the plurality of bearings. According to this, the first bearing and the second bearing may stably support the rotational shaft from both sides. When the fan motor rotates at a high speed, the first heat dissipation fin may cool the first bearing and the second heat dissipation fin may cool the second bearing.
the first heat dissipation fin may be disposed to be in contact with a downstream side surface of the first bearing based on an air flow direction, and the second heat dissipation fin may be disposed to be in contact with an upstream side surface of the second bearing based on the air flow direction. According to this, the first heat dissipation fin and the second heat dissipation fin may be disposed in opposite directions to blow air to the first bearing and the second bearing, respectively.
(13) In the item (12), the fan motor may further include a casing surrounding the stator and accommodating the rotational shaft inserted through a center of the stator. The casing may include: a first housing in which the impeller is accommodated; a second housing coupled to a downstream side of the first housing based on a flow direction of air suctioned by the impeller; a vane hub disposed on a downstream side of the impeller based on the flow direction of the air; a plurality of vanes extending to protrude from an outer circumferential surface of the vane hub toward an inner circumferential surface of the first housing or the second housing; and a third housing coupled to a downstream side of the vane hub based on the flow direction of the air and having the stator mounted therein. The first heat dissipation fin may be disposed to be accommodated inside the vane hub, and the second heat dissipation fin may be disposed to be accommodated inside the third housing. According to this, the plurality of vanes may convert a rotational flow of air suctioned by the impeller into an axial flow. The first heat dissipation fin may allow air accommodated in the vane hub to move by convection.

The third housing may include a second bearing housing extending in an axial direction to enclose the second bearing, and a bridge extending in a radial direction from an outer circumferential surface of the second bearing housing toward an inner circumferential surface of the third housing to connect the second bearing housing and the third housing. According to this, the bridge may stably support the second bearing housing.
(14) In the item (13), the vane hub may include: a cover portion extending radially from one axial end portion of the vane hub and disposed between the impeller and the first bearing; a first bearing housing protruding axially from an inside of the cover portion to enclose the first bearing; and an axial movement restricting portion protruding radially from the inside of the cover portion to be in contact with an upstream side surface of the first bearing. According to this, when the impeller rotates, thrust is generated on the rotational shaft in a direction opposite to an air flow direction. The axial movement restricting portion may restrict the first bearing from moving in the axial direction due to the thrust. The axial movement restricting portion in contact with the first bearing may be referred to as a first axial movement restricting portion in a detailed description of the present disclosure.
(15) In the item (12), the rotational shaft may include a first bearing support portion to support the first bearing, and a second bearing support portion to support the second bearing, and a diameter of the first bearing support portion may be larger than a diameter of the second bearing support portion. According to this, the diameter of the first bearing support portion, which is a portion of the rotational shaft adjacent to the impeller, may be reinforced to be thick so that the rotational shaft can withstand thrust well.

### ADVANTAGEOUS EFFECTS

According to embodiments of the present disclosure, the following effects can be achieved.

First, a heat dissipation fin includes a ring portion and a plurality of rotating blades. The heat dissipation fin is formed of a metal material having a high heat transfer coefficient. The ring portion is mounted on a rotational shaft to be in contact with one axial side surface of a bearing. The plurality of rotating blades are provided on an outer circumferential surface of the ring portion or a connection portion in a circumferential direction. The plurality of rotating blades rotate together with the rotational shaft centering on the ring portion. The plurality of rotating blades causes a rotational flow of air. Since a casing such as a bearing housing is made of a plastic material, the plurality of rotating blades use convection to blow air to the bearing even when considerable heat is generated in the bearing, so that the bearing can be effectively cooled. The ring portion may transfer the heat of the bearing to the air using conduction. The ring portion may restrict an axial movement of the bearing.

Second, the heat dissipation fin includes a ring portion formed in a cylindrical shape and enclosing the rotational shaft, a connection portion formed in a disk shape and extending to protrude radially from one axial end portion of the ring portion, and a plurality of rotating blades protruding radially from an outer circumferential surface of the connection portion to be inclined with respect to the axial direction.

The heat dissipation fin may expand a contact area with air, increase a heat dissipation area of the bearing, and improve cooling performance of the bearing. This can solve a problem of heat generated in the bearing of a high-speed fan motor using a plastic housing.

Third, the heat dissipation fin may greatly expand a heat dissipation area of the bearing while having a simple structure.

Fourth, the ring portion is formed shorter in length than diameter. The plurality of rotating blades protrude in an up and down direction from one axial side surface and another axial side surface of the connection portion. The plurality of rotating blades adjacent to each other in a circumferential direction are disposed so as not to overlap each other in the axial direction. According to this configuration, a radial protrusion length and a circumferential length of the rotating blades may be shortened, which may greatly contribute to reducing the size and weight of the fan motor.

Fifth, the heat dissipation fin may include a flexure plate. The flexure plate includes convex portions and concave portions alternately and consecutively disposed along a circumferential direction. Air around the heat dissipation fin may be suctioned into both sides along an axial direction with respect to the flexure plate.

Both upper and lower surfaces of the flexure plate change in curvature along the circumferential direction. Accordingly, when the flexure plate rotates together with the rotational shaft, air flows occur on the upper and lower surfaces of the flexure plate, respectively.

When the convex portions and the concave portions formed on the upper and lower surfaces of the flexure plate rotate, the air in contact with the upper surface of the flexure plate is rotated by the convex portions and the concave portions. A flow velocity of the air in contact with the upper surface of the flexure plate is increased.

According to this, pressure of the air in contact with the upper surface of the flexure plate is lowered. Since pressure of surrounding air adjacent to the upper surface of the flexure plate is relatively high, the surrounding air moves toward the upper surface and the lower surface of the flexure plate.

In addition, the air moved to the flexure plate moves radially from inside to outside of the flexure plate by centrifugal force.

Accordingly, a flow direction of the surrounding air adjacent to the flexure plate moves toward the convex portions and the concave portions of the flexure plate in opposite directions That is, due to the rotation of the flexure plate, the surrounding air of the flexure plate obtains bidirectionality on the upper and lower surfaces of the flexure plate to cause counterflow (flows in opposite directions).

Heat generated in the bearing is transferred to the flexure plate through conduction of the ring portion. The flexure plate may expand a contact area with air through changes in curved surfaces of the convex portions and the concave portions.

The flexure plate may rotate along with the rotational shaft and cause convection of surrounding air, thereby maximizing heat dissipation performance of the bearing.

Sixth, a plurality of flow holes may be disposed in the flexure plate. The plurality of flow holes may be formed through the flexure plate in the axial direction. The plurality of flow holes may be spaced apart at intervals in the circumferential direction. The plurality of flow holes may be spaced apart at intervals in the radial direction.

According to this configuration, the flow holes may allow air to flow on the upper or lower surface of the flexure plate when the flexure plate rotates.

An air pressure difference may occur between the upper and lower surfaces of the flexure plate. The plurality of flow holes may allow air around the flexure plate to flow to the bearing.

The plurality of flow holes may allow air around the flexure plate to the bearing through the flexure plate, thereby further improving the cooling performance of the bearing.

### BRIEF DESCRIPTION OF DRAWINGS

FIG. 1 is a perspective view illustrating appearance of a fan motor in accordance with the present disclosure.
FIG. 2 is an exploded view of the fan motor of FIG. 1.
FIG. 3 is a sectional view illustrating the fan motor, taken along a line III-III in FIG. 1.
FIG. 4 is a conceptual view illustrating a state in which a heat dissipation fin is mounted on a rotational shaft in FIG. 3.
FIG. 5 is a conceptual view illustrating a structure of the heat dissipation fin in FIG. 4 in detail.
FIG. 6 is a planar view illustrating the heat dissipation fin of FIG. 5, viewed from a top.
FIG. 7 is a lateral view illustrating the heat dissipation fin in FIG. 6, viewed in a radial direction.
FIG. 8 is a sectional view illustrating the heat dissipation fin, taken along a line VIII-XIII in FIG. 6.
FIG. 9 is a sectional view illustrating a fan motor having a heat dissipation fin in accordance with another embodiment of the present disclosure.
FIG. 10 is a perspective view illustrating the heat dissipation fin in FIG. 9.
FIG. 11 is a planar view illustrating the heat dissipation fin of FIG. 10, viewed from a top.
FIG. 12 is a lateral view illustrating the heat dissipation fin in FIG. 11, viewed in a radial direction.
FIG. 13 is a sectional view taken along a line XIII-XIII in FIG. 11.
FIG. 14 is a planar view illustrating a heat dissipation fin in accordance with still another embodiment of the present disclosure, viewed from a top.
FIG. 15 is a sectional view taken along a line XV-XV in FIG. 14.

### DETAILED DESCRIPTION

Hereinafter, a fan motor according to an embodiment of the present disclosure will be described in detail with reference to the accompanying drawings.

In the following description, in order to clarify the characteristics of the present disclosure, descriptions of some components may be omitted.

### 1. Definition of Terms

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the another element or intervening elements may also be present. On the contrary, in case where an element is "directly connected" or "directly linked" to another element, it should be understood that any other element is not existed therebetween.

A singular representation used in the present specification may include a plural representation as far as it represents a definitely different meaning from the context.

The term "fan motor" used in the following description may be understood as a concept meaning a device that suctions or blows air by rotating a fan using power of an electric motor or the like.

The term "conduction" used in the following description means a phenomenon in which heat is transferred between solid objects in a stationary state is transferred only by a temperature difference without changes in position. An amount of heat conduction occurred between two objects is proportional to a temperature difference and a contact area between the two objects, and inversely proportional to a distance.

The term "convection" used in the following description means a phenomenon in which heat is transferred through a fluid such as air or water.

The term "thrust" used in the following description means a force applied by a fluid such as air to an impeller in a direction opposite to an axial direction when the impeller suctions the fluid in the axial direction, namely, a force acting on the impeller or a rotational shaft on which the impeller is mounted.

The term "axial direction" used in the following description means a longitudinal direction of the rotational shaft.

The term "radial direction" used in the following description means a longitudinal direction of a line segment from a center of a circle or cylinder to a point on a circumference.

The term "circumferential direction" used in the following description means a direction of a circumference of a circle.

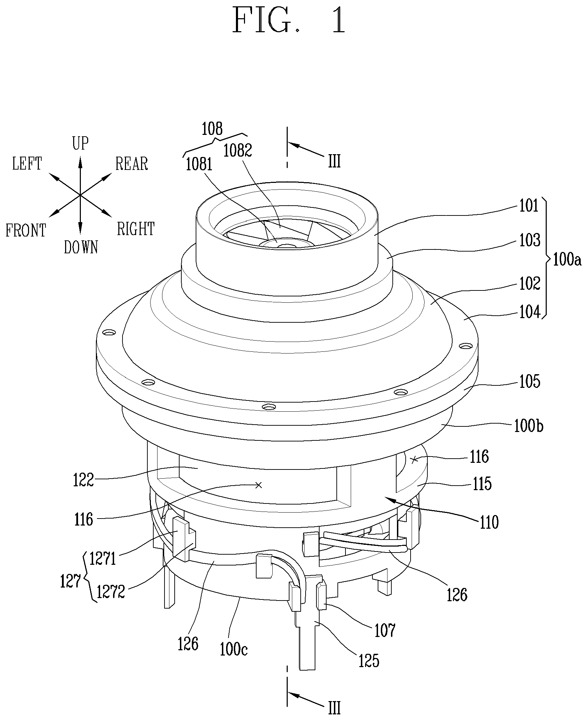

The terms "upper side", "lower side", "right side", "left side", "front side" and "rear side" used in the following description will be understood through the coordinate system shown in FIG. 1.

The term "axial direction" used in the following description may be understood as a concept corresponding to a vertical or up-down direction.

The term "radial direction" used in the following description may be understood as a concept corresponding to a left-right direction or a forward-backward direction.

### 2. Description of configuration of fan motor according to one embodiment

FIG. 1 is a perspective view illustrating appearance of a fan motor in accordance with the present disclosure.

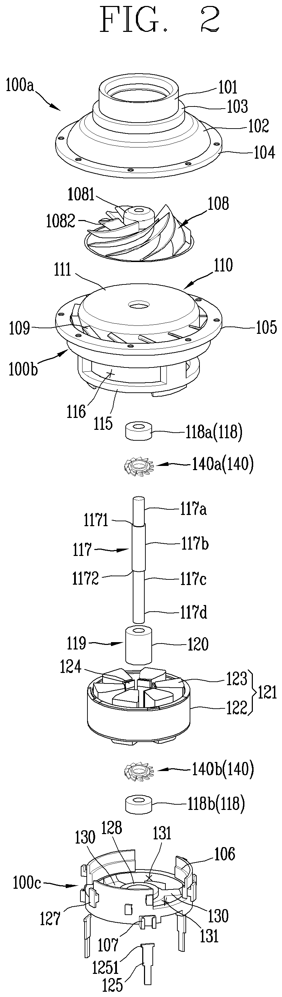

FIG. 2 is an exploded view of the fan motor of FIG. 1.

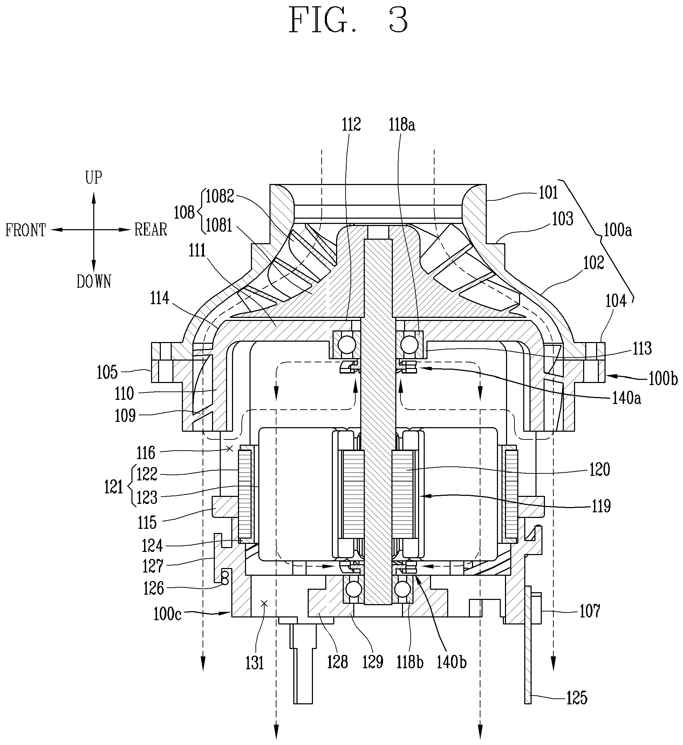

FIG. 3 is a sectional view illustrating the fan motor, taken along a line III-III in FIG. 1.

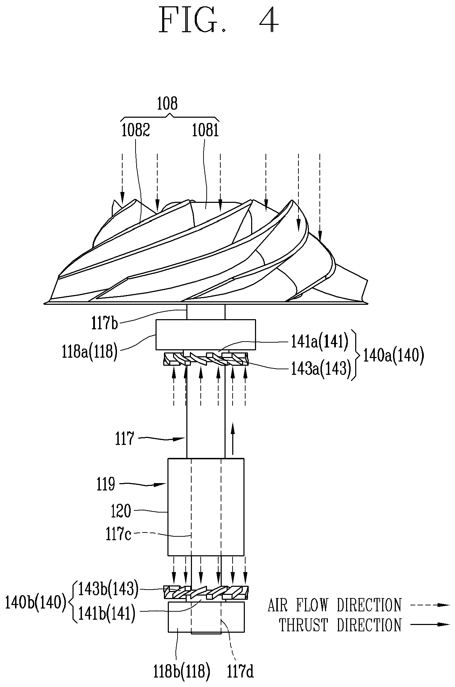

FIG. 4 is a conceptual view illustrating a state in which a heat dissipation fin 140 is mounted on a rotational shaft 117 in FIG. 3.

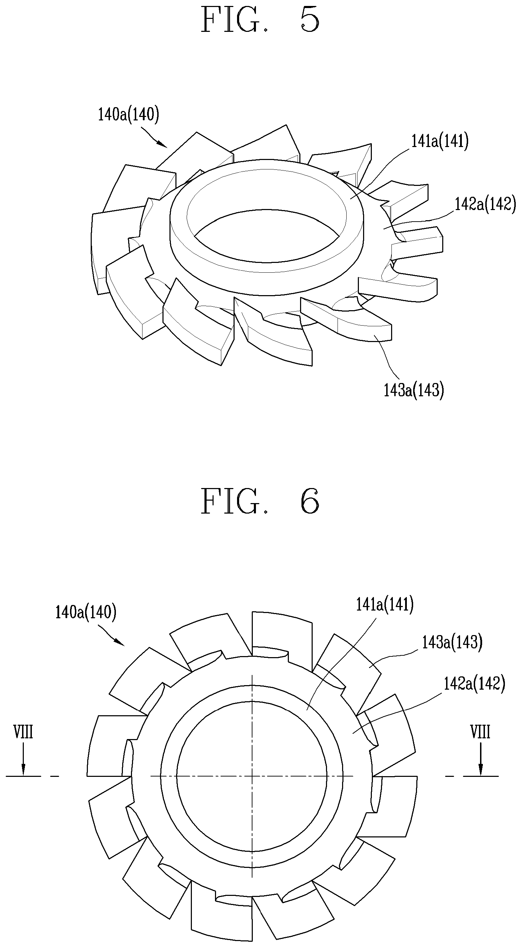

FIG. 5 is a perspective view illustrating a structure of the heat dissipation fin 140 in FIG. 4 in detail.

FIG. 6 is a planar view illustrating the heat dissipation fin 140 of FIG. 5, viewed from a top.

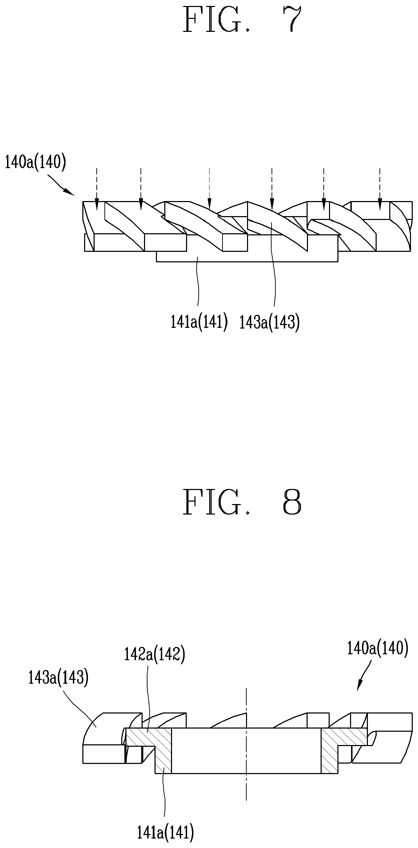

FIG. 7 is a lateral view illustrating the heat dissipation fin 140 in FIG. 6, viewed in a radial direction.

FIG. 8 is a sectional view illustrating the heat dissipation fin 140, taken along a line VIII-VIII in FIG. 6.

The fan motor of the present disclosure may be applied to home appliances such as a handy-stick cleaner and the like.

The fan motor may roughly include a casing, an impeller 108, and a motor unit.

The casing defines appearance of the fan motor. The casing includes a first housing 100a, a second housing 100b, and a third housing 100c. The casing may be formed of a plastic material. The casing may be referred to as a housing.

The first housing 100a has an accommodation space in which the impeller 108 and portions of vanes 109 are accommodated. The second housing 100b has an accommodation space in which other portions of the vanes 109.

The first housing 100a and the second housing 100b may be coupled to be detachable from each other but may also be integrally formed as a single housing.

The first housing 100a and the second housing 100b may form a boundary separating outside and inside of the fan motor. Movement flow paths of air generated by the impeller 108 may be defined between the first housing 100a and the impeller 108 and between the first housing 100a and the second housing 100b and the vane hub 110 to be described later.

The first housing 100a is formed in a conical shape. The first housing 100a may vary in diameter along a longitudinal (lengthwise) direction of a cylinder.

Explaining the detailed configuration of the first housing 100a, the first housing 100a may include an inlet port 101, a curved portion 102, a reinforcing portion 103, and a first flange portion 104. The detailed components of the first housing 100a may be divided in order from an upstream side to a downstream side of the first housing 100a based on an air flow direction.

The inlet port 101 is located at an upstream end portion of the first housing 100a. The inlet port 101 is formed in a cylindrical shape. The inlet port 101 has relatively small diameter and short length compared to other detailed components of the first housing 100a. The inlet port 101 may be formed through the first housing 100a in an axial direction. One end portion of the impeller 108 may be accommodated inside the inlet port 101.

Accordingly, air generated by the impeller 108 is suctioned through the inlet port 101.

An arch portion and an axial extension portion may be disposed inside the inlet port 101. The arch portion may be formed in an arcuate shape to minimize flow resistance of suctioned air. The axial extension portion may extend in the axial direction on the downstream side of the arch portion based on the air flow direction.

The curved portion 102 is disposed at a downstream side of the inlet port 101. The curved portion 102 is inclined with respect to a rotational shaft 117 so that its diameter gradually increases from the upstream side to the downstream side of the first housing 100a. A degree of inclination of the curved portion 102 may be different in the longitudinal direction.

The reinforcing portion 103 may be formed at a portion where the inlet port 101 and the curved portion 102 are connected. The reinforcing portion 103 may reinforce rigidity by increasing a thickness of the housing at a portion with the greatest diameter difference between the inlet port 101 and the curved portion 102.

The reinforcing portion 103 may expand radially outward from a downstream end portion of the inlet port 101 based on the air flow direction and extend axially from an outer circumferential portion thereof.

The first flange portion 104 extends radially outward from a lower end of the curved portion 102. The first flange portion 104 extends from the lower end of the curved portion 102 in the circumferential direction.

A plurality of first fastening holes are formed through the first flange portion 104 in the axial direction. The plurality of first fastening holes 104 are spaced apart from one another in the circumferential direction.

The second housing 100b is formed in a cylindrical shape. The second housing 100b is disposed at a downstream end portion of the first housing 100a based on the air flow direction. A diameter of the second housing 100b corresponds to a diameter of the downstream end portion of the first housing 100a.

A second flange portion 105 extends radially outward from an upper end of the second housing 100b. The second flange portion 105 extends from the upper end of the second housing 100b in the circumferential direction.

A plurality of second fastening holes are formed through the second flange portion 105 in the axial direction. The plurality of second fastening holes 105 are spaced apart from one another in the circumferential direction of the second flange portion 105.

The first fastening holes and the second fastening holes are disposed to overlap each other in the axial direction. A fastening member such as a screw is provided in plurality. The plurality of fastening members may be fastened to the first flange portion 104 and the second flange portion 105 through the first fastening holes and the second fastening holes, such that the first flange portion 104 and the second flange portion 105 are fastened to each other.

The rotational shaft 117 is disposed in a central portion of the casing. The rotational shaft 117 extends along the axial direction passing through the center of the casing.

One end portion of the rotational shaft 117 is accommodated inside the first housing 100a and the second housing 100b. The impeller 108 is rotatably mounted on the one end portion of the rotational shaft 117.

The impeller 108 includes a hub 1081 and a plurality of blades 1082.

The hub 1081 is inclined so that its diameter increases along the axial direction. The diameter of the hub 1081 gradually increases from an upstream end portion to a downstream-side end portion of the hub 1081 based on an air flow direction.

An impeller support portion 117a is disposed on one end portion of the rotational shaft 117. The impeller support portion 117a may be accommodated in the central portion of the hub 1081. A shaft coupling groove is formed in the central portion of the hub 1081. A diameter of the shaft coupling groove corresponds to a diameter of the impeller support portion 117a. A rotational shaft support portion may be inserted into the shaft coupling groove.

A shaft fastening hole may be formed in an upper end of the hub 1081. A diameter of the shaft fastening hole may be smaller than the diameters of the impeller support portion 117a and the shaft coupling groove. A fastening member such as a screw may be fastened to the rotational shaft 117 through the shaft fastening hole, so that the impeller 108 and the rotational shaft 117 are not separated from each other in the axial direction.

Each of a plurality of blades 1082 may spirally extend along the axial direction of the hub 1081. The plurality of blades 1082 may protrude from an inclined surface of the hub 1081 at preset angles with respect to the axial direction.

The plurality of blades 1082 are spaced apart from one another at preset intervals along a circumferential direction of the hub 1081.

An air flow path is defined between the first housing 100a and the inclined surface of the hub 1081. The plurality of blades 1082 protrude from the inclined surface of the hub 1081 toward the curved portion 102 of the first housing 100a.

The plurality of blades 1082 are rotatably disposed on the inclined surface of the hub 1081 with a preset interval from an inner circumferential surface of the first housing 100a.

With the configuration, the impeller 108 may rotate together with the rotational shaft 117. As the plurality of blades 1082 that rotate at high speed together with the hub 1081 make air flow in an inner space of the first housing 100a, external air may be suctioned.

The vanes 109 are disposed on an outer circumferential surface of the vane hub 110.

The vane hub 110 may be formed in a cylindrical shape. A cover portion 111 may be disposed on one axial end of the vane hub 110. The cover portion 111 extends in the radial direction to cover an upper end of the vane hub 110.

A shaft through hole is formed through a central portion of the cover portion 111 in the axial direction. The shaft through hole has a diameter that is larger than the diameter of the rotational shaft 117.

The rotational shaft 117 may include an impeller support portion 117a, a first bearing support portion 117b, a magnet support portion 117c, and a second bearing support portion 117d. The impeller support portion 117a, the first bearing support portion 117b, the magnet support portion 117c, and the second bearing support portion 117d are disposed in order from the upstream side to the downstream side along the axial direction based on the air flow direction.

The impeller support portion 117a is coupled to the impeller 108 to support the impeller 108. The first bearing support portion 117b is coupled to a first bearing 118a to support the first bearing 118a. The magnet support portion 117c is coupled to a permanent magnet 120 to support the permanent magnet 120. The second bearing support portion 117d is coupled to a second bearing 118b to support the second bearing 118b.

A diameter of the first bearing support portion 117b may be larger than diameters of the impeller support portion 117a, the magnet support portion 117c, and the second bearing support portion 117d. The first bearing support portion 117b may increase a diameter of a portion of the rotational shaft 117 to better withstand thrust, which is generated during rotation of the impeller 108, thereby reinforcing rigidity of the rotational shaft 117.

A first axial movement restricting portion 112 may be disposed at the central portion of the cover portion 111. The first axial movement restricting portion 112 surrounds one axial side surface of the shaft through hole of the cover portion 111. The first axial movement restricting portion 112 protrudes radially inward from the central portion of the cover portion 111 to cover one axial side surface of the first bearing 118a.

With this configuration, the first axial movement restricting portion 112 may restrict the axial movement of the first bearing 118a due to the thrust.

A thickness of the first axial movement restricting portion 112 may increase to reinforce rigidity of the cover portion 111 such that the cover portion 111 can withstand the thrust well.

A diameter of the vane hub 110 may be larger than a maximum diameter of the hub 1081. A length of the vane hub 110 may be shorter than the diameter of the vane hub 110.

A round portion 114 may be formed on an upper end portion of the vane hub 110 in a curved shape to have a preset curvature. The curvature of the round portion 114 may be the same as or similar to that of the curved portion 102 of the first housing 100a. A diameter of an upper end of the round portion 114 may correspond to a diameter of a lower end of the hub 1081 of the impeller 108.

With the configuration, the hub 1081 of the impeller 108 and the round portion 114 form a streamline of air, thereby minimizing flow resistance.

The vane hub 110 is disposed inside the first housing 100a and the second housing 100b. A portion of the vane hub 110 may be accommodated inside the first housing 100a, and another portion of the vane hub 110 may be accommodated inside the second housing 100b.

An outer circumferential surface of the vane hub 110 is spaced apart from inner circumferential surfaces of the first housing 100a and the second housing 100b at a specific interval.

The vane 109 may be provided in plurality in the vane hub 110. The plurality of vanes 109 are disposed between the first and second housings 100b and the vane hub 110. The plurality of vanes 109 may be formed integrally with the vane hub 110 or integrally with the second housing 100b. Alternatively, the plurality of vanes 109 may be integrally formed with the vane hub 110 and the second housing 100b.

In this embodiment, an example in which the plurality of vanes 109 are integrally formed with the vane hub 110 and the second housing 100b. The vanes 109, the vane hub 110, and the second housing 100b may be integrally formed by injection molding.

The plurality of vanes 109 may be inclined into a curved shape with a preset curvature along an outer circumferential surface of the vane hub 110. The plurality of vanes 109 protrude radially outward from the outer circumferential surface of the vane hub 110. The plurality of vanes 109 may protrude from the inner circumferential surface of the second housing 100b to the outer circumferential surface of the vane hub 110.

The plurality of vanes 109 are disposed on an outer circumferential surface of the vane hub 110 to be spaced apart from one another in the circumferential direction.

A bending (inclination) direction of the vane 109 may be opposite to a bending (inclination) direction of the blade 1082. For example, based on the air flow direction, the blades 1082 may be inclined in a clockwise direction while the vanes 109 may be inclined in a counterclockwise direction.

The vanes 109 are configured to switch the air flow direction from the radial direction to the axial direction. Accordingly, air generated by the impeller 108 can be guided by the vanes 109 to flow in the axial direction.

An outer diameter of each of the plurality of vanes 109 that radially protrude from the outer circumferential surface of the vane hub 110 may correspond to an inner diameter of the first flange portion 104 of the first housing 100a. Accordingly, outer ends of the plurality of vanes 109 may be press-fitted to an inner circumferential surface of the first flange portion 104 of the first housing 100a.

In addition, the vane hub 110 is fixedly connected to the second housing 100b by the plurality of vanes 109.

A first bearing housing 113 is disposed inside the central portion of the cover portion 111. The first bearing housing 113 protrudes axially from an axial inner surface of the cover portion 111. The first bearing housing 113 is formed in a cylindrical shape.

An accommodation space is defined inside the first bearing housing 113 to accommodate the first bearing 118a to be described later. The first bearing housing 113 encloses the first bearing 118a.

The first bearing housing 113 and the first axial movement restricting portion 112 may be disposed to be perpendicular to each other in the central portion of the cover portion 111.

The rotational shaft 117 is rotatably disposed inside the casing.

The bearing 118 is provided to rotatably support the rotational shaft 117. The bearing 118 may be provided in plurality.

The plurality of bearings 118 may include a first bearing 118a and a second bearing 118b.

The first bearing 118a and the second bearing 118b are spaced apart from each other on both sides of the rotational shaft 117 with a motor unit to be described later interposed therebetween.

The first bearing support portion 117b is disposed on one side of the rotational shaft 117. The second bearing support portion 117d is disposed on another side of the rotational shaft 117.

The first bearing 118a is supportedly disposed on the first bearing support portion 117b. The second bearing 118b is supportedly disposed on the second bearing support portion 117d.

The impeller support portion 117a is disposed on one end portion of the rotational shaft 117. A diameter of the first bearing support portion 117b may be larger than a diameter of the impeller support portion 117a by a preset value. Accordingly, a first stopping jaw 1171 formed between the impeller support portion 117a and the first bearing support portion 117b may restrict the impeller 108 from moving from the impeller support portion 117a of the rotational shaft 117 toward the first bearing support portion 117b in the axial direction. In addition, the lower end of the hub 1081 of the impeller 108 and the cover portion 111 may be spaced apart from each other in the axial direction.

The magnet support portion 117c is disposed on the rotational shaft 117. The magnet support portion 117c is disposed between the first bearing support portion 117b and the second bearing support portion 117d. The magnet support portion 117c extends along the axial direction from the first bearing support portion 117b toward the second bearing support portion 117d.

A diameter of the magnet support portion 117c may be smaller than the diameter of the first bearing support portion 117b.

A second stopping jaw 1172 formed between the first bearing support portion 117b and the magnet support portion 117c may restrict the permanent magnet 120 from moving toward the first bearing support portion 117b in the axial direction.

The following description of the bearing 118 may be applied to each of the first bearing 118a and the second bearing 118b, unless otherwise specified. However, as the diameter of the first bearing support portion 117b becomes larger than the diameter of the second bearing support portion 117d, a diameter of the first bearing 118a may also be larger than a diameter of the second bearing 118b.

The bearing 118 may be implemented as a ball bearing 118. The ball bearing 118 is provided to support a radial load of the rotational shaft 117. The bearing 118 may include an outer ring, an inner ring, a plurality of balls, and a plurality of covers.

The outer ring is formed in a cylindrical shape. A bearing housing may be formed to enclose the outer ring. The inner ring is formed in a cylindrical shape. The inner ring is disposed inside the outer ring to surround the bearing support portion.

The plurality of balls are disposed between the outer ring and the inner ring. The plurality of balls are spaced apart from one another at preset intervals in the circumferential direction of the outer ring and the inner ring.

The plurality of balls roll in contact with the outer ring and the inner ring between the outer ring and the inner ring. The inner ring rotates relative to the outer ring by the balls. The inner ring rotates together with the rotational shaft 117.

The plurality of covers are coupled to cover both sides of the outer ring and the inner ring in the axial direction, respectively.

However, the bearing 118 is not limited to a ball bearing.

With the configuration, the plurality of bearings 118 can stably and rotatably support both sides of the rotational shaft 117.

Bearing housings 113 and 128 are formed in a cylindrical shape. An accommodation space for accommodating the bearing 118 is formed inside each of the bearing housings 113 and 128. The bearing housings 113 and 128 include a first bearing housing 113 and a second bearing housing 128.

The first bearing housing 113 encloses and accommodates the first bearing 118a. The second bearing housing 128 encloses and accommodates the second bearing 118b.

The vane hub 110 is disposed at a downstream side of the impeller 108 based on the air flow direction.

The vane hub 110 has an accommodation space for accommodating a portion of a motor unit to be described later.

A plurality of openings 116 are disposed at the vane hub 110. The plurality of openings 116 are formed through the vane hub 110 in the radial direction. The plurality of openings 116 are disposed to be spaced apart from one another in the circumferential direction of the vane hub 110. In the embodiment of the present disclosure, three openings 116 may be formed to correspond to the number of coils 123. The openings 116 may be disposed at equal intervals of 120 degrees.

According to this, the inside and the outside of the vane hub 110 may communicate with each other through the openings 116. An air flow path may be defined in the accommodation space inside the vane hub 110. Air passing through the vanes 109 may be introduced into the vane hub 110 through the openings 116.

One side of the vane hub 110 may be blocked by the cover portion 111 and another side of the vane hub 110 may be axially open toward an opposite direction of the cover portion 111. A portion of the motor unit may be accommodated inside the vane hub 110 through the another side of the vane hub 110.

A fixing ring 115 is disposed on the another side of the vane hub 110. The fixing ring 115 surrounds an outer circumferential surface of a stator core 122 to be described later.

The motor unit receives electrical energy to rotate the rotational shaft 117 and rotates the impeller 108 mounted on one end portion of the rotational shaft 117.

To this end, the motor unit includes a rotor 119 and a stator 121.

The rotor 119 includes a permanent magnet 120.

The permanent magnet 120 is formed in a cylindrical shape. A shaft through hole is formed through a central portion of the permanent magnet 120. The shaft through hole is formed through the permanent magnet 120 in the axial direction.

The permanent magnet 120 is mounted on the magnet support portion 117c of the rotational shaft 117. An inner diameter of the permanent magnet 120 corresponds to a diameter of the magnet support portion 117c, and an outer diameter of the permanent magnet 120 is larger than a diameter of the first bearing support portion 117b.

The rotor 119 may be disposed between the first bearing 118a and the second bearing 118b.

The permanent magnet 120 may be mounted on the rotational shaft 117 or on a rotor core (not illustrated). In the embodiment of the present disclosure, the permanent magnet 120 is shown mounted on the rotational shaft 117.

The stator 121 includes a stator core 122 and coils 123.

The stator core 122 may be formed by stacking thin electrical steel sheets in the axial direction. The stator core 122 is formed in a cylindrical shape. A rotor through hole is formed through a central portion of the stator core 131. The rotor through hole is formed through the stator core 122 in the axial direction.

A diameter of the rotor through hole is slightly larger than the diameter of the permanent magnet 120. The permanent magnet 120 may maintain a preset distance (air gap) from an inner circumferential surface of the stator core 122.

The stator core 122 includes a back yoke, a plurality of slots, and a plurality of teeth.

The back yoke is formed in a cylindrical shape.

The plurality of teeth are formed to protrude from the back yoke toward the rotational shaft 117 in the radial direction. Pole shoes may protrude in the circumferential direction from inner end portions of the plurality of teeth.

The plurality of slots are formed through the stator core 122 in the axial direction. The plurality of teeth and the plurality of slots are alternately arranged in a spaced manner in the circumferential direction of the stator core 122. This embodiment illustrates three teeth and three slots.

The plurality of teeth and the plurality of slots each may be spaced apart from one another at intervals of 120 degrees in the circumferential direction.

The plurality of coils 123 are wound on the stator core 122 through the plurality of slots, respectively. In this embodiment, three coils 123 are illustrated. Three-phase AC currents may be applied to the three coils 123.

Insulators 124 are provided for electrical insulation between the coils 123 and the stator core 122. The insulators 124 may be made of a non-conductor.

The insulators 124 may be disposed between the coils 123 and the stator core 122 to block current from flowing between the coils 123 and the stator core 122.

The plurality of coils 123 and the plurality of insulators 124 each may be spaced apart from one another at intervals of 120 degrees along the circumferential direction of the stator core 122.

The stator 121 is provided with a plurality of terminals 125 so that external three-phase AC power is supplied to the coils 123. In the embodiment of the present disclosure, three terminals 125 may be provided one by one for each phase.

The terminals 125 electrically connect an external three-phase AC power source and the coils 123.

A third housing 100c is disposed at a downstream side of the vane hub 110. The third housing 100c may be coupled to the lower end of the vane hub 110. The third housing 100c may be formed in a cylindrical shape.

The third housing 100c has an accommodation space in which another portion of the motor unit is accommodated. The third housing 100c encloses the stator core 122.

A stator mounting portion 106 may be disposed on an inner circumferential surface of the third housing 100c. The stator mounting portion 106 protrudes radially from an inner circumferential surface of the third housing 100c. The stator mounting portion 106 may extend along the inner circumferential surface of the third housing 100c in the circumferential direction.

The stator core 122 may be fixedly mounted on the stator mounting portion 106.

A plurality of terminal fixing portions 107 may be disposed on an outer circumferential surface of the third housing 100c. One terminal 125 may be provided for each of the three-phase coils 123. In this embodiment, three terminal fixing portions 107 may be provided. The stator mounting portion 107 may extend along the inner circumferential surface of the third housing 100c in the circumferential direction.

Each of the terminal fixing portions 107 encloses both side surfaces of the terminal 125. The terminal mounting portion 107 may protrude from an outer circumferential surface of the third housing 100c in the radial direction.

The terminal fixing portion 107 may extend axially from the outer circumferential surface of the third housing 100c. A fixing groove may be formed inside the terminal fixing portion 107 to fix the terminal 125. The terminal 125 may be fitted into the fixing groove of the terminal fixing portion 107.

Stopping protrusions 1251 may be formed on both sides of an upper end of the terminal 125. When the terminal 125 is inserted into the terminal fixing portion 107 from top to bottom, the stopping protrusions 1251 of the terminal 125 may be fixedly stopped on an upper end of the terminal fixing portion 107.

In addition, the terminal fixing portion 107 encloses a portion of a radial outer surface of the terminal 125 to prevent the terminal 125 from being separated from the terminal fixing portion 107 to the outside in the radial direction.

The terminal 125 may protrude axially from the terminal fixing portion 107 disposed on the lower end of the third housing 100c.

A lead wire holder 127 is disposed at an end portion of each phase coil 123. The lead wire holder 127 extends to be electrically connected to the terminal 125.

The lead wire holder 127 may be provided in plurality on the outer circumferential surface of the third housing 100c. each of the lead wire holders 127 may be formed in a "T" shape. The lead wire holder 127 may include a vertical portion 1271 and a horizontal portion 1272.

The horizontal portion 1272 horizontally extends outward in the radial direction from the outer circumferential surface of the third housing 100c. An inner side of the horizontal portion 1272 may be connected to the third housing 100c, and an outer side of the horizontal portion 1272 may be connected to a central portion of the vertical portion 1271.

The vertical portion 1271 is spaced apart from the outer circumferential surface of the third housing 100c and extends in a vertical direction. The lead wire holder 127 may be fitted into a lead wire holder fixing groove formed between the vertical portion 1271 and the third housing 100c.

The second bearing housing 128 may be disposed inside the third housing 100c. The second bearing housing 128 is formed in a cylindrical shape to enclose the second bearing 118b.

An accommodation space is defined inside the second bearing housing 128 to accommodate the second bearing 118b. The second bearing 118b may be coupled to be accommodated inside the second bearing housing 128.

A second axial movement restricting portion 129 is disposed on an inner circumferential surface of the second bearing housing 128. The second axial movement restricting portion 129 protrudes radially inward from the inner circumferential surface of the second bearing housing 128. The second axial movement restricting portion 129 may extend from the inner circumferential surface of the second bearing housing 128 in the circumferential direction.

With this configuration, the second axial movement restricting portion 129 may restrict the second bearing 118b from axially moving in the second bearing housing 128.

The second bearing housing 128 may be spaced radially inward apart from the inner circumferential surface of the third housing 100c. A plurality of bridges 130 are disposed between the inner circumferential surface of the third housing 100c and the outer circumferential surface of the second bearing housing 128.

The plurality of bridges 130 extend radially between the inner circumferential surface of the third housing 100c and the outer circumferential surface of the second bearing housing 128 to connect the third housing 100c and the second bearing housing 128.

The plurality of bridges 130 are spaced apart from one another in the circumferential direction. An outlet 131 may be formed between the plurality of bridges 130 adjacent to each other in the circumferential direction. The plurality of bridges 130 and the plurality of outlets 131 may be alternately spaced apart in the circumferential direction.

The plurality of bridges 130 may be disposed to overlap the plurality of teeth in the axial direction.

The plurality of coils 123 are spaced apart in the circumferential direction. An air flow path may be defined between the plurality of coils 123 adjacent to each other in the circumferential direction.

The plurality of outlets 131 may be disposed to overlap an air flow path defined between the plurality of coils 123 adjacent to each other in the axial direction.

Hereinafter, operations and effects of a fan motor according to one embodiment of the present disclosure will be described.

An operating state of the fan motor will first be described as follows.

When current is applied to the coil 123 of the stator 121 through the lead wire holder 127, a magnetic field is generated around the coil 123. The coil 123 of the stator 121 and the permanent magnet 120 of the rotor 119 interact electromagnetically with each other, so that the rotor 119 rotates relative to the stator 121 centering on the rotational shaft 117. The rotational shaft 117 rotates together with the rotor 119 and transmits rotational force to the impeller 108. The impeller 108 is rotated by the rotational force transmitted through the rotational shaft 117.

The impeller 108 rotates air and suctions external air into the first housing 100a through the inlet port 101. The suctioned air passes through the vanes 109. The vanes 109 switch a rotational flow of the air to an axial flow.

The flow of air passing through the vane 109 may be divided into an outer flow passing through the outside of the vane hub 110 and an inner flow passing through the inside of the vane hub 110 based on the vane hub 110.

For example, air that has passed through the vane 109 may partially move axially along the outer circumferential surface of the vane hub 110 while making the outer flow.

The air that has passed through the vane 109 may also partially move into the vane hub 110 through the opening 116, and exhaust to the outside through the outlet 131 via the flow path between the coils 123 of the motor unit.

The plurality of bearings 118 rotatably support the rotational shaft 117.

The first bearing 118a and the second bearing 118b may stably support both sides of the rotational shaft 117 with the relatively heavy rotor 119 interposed therebetween.

In order to reduce a weight of a fan motor of a cleaner, a material of a casing and the like may change to a plastic material instead of a metal. Here, components whose material may change to the plastic material may include the first housing 100a to the third housing 100c of the casing, the impeller 108, the vane hub 110, the bearing housings 113 and 128, the axial movement restricting portions, and the like.

However, since the plastic material offers a lower heat transfer coefficient than the metal material, a temperature of the bearing 118 or the like increases. This may shorten a lifespan of the bearing 118 and deteriorate reliability of the fan motor.

To solve such problems, a heat dissipation fin 140 may be provided. The heat dissipation fin 140 may be formed of a metal material having a high heat transfer coefficient for cooling the bearing 118. The heat dissipation fin 140 may be disposed to be in contact with one side of the bearing 118.

According to this, the heat dissipation fin 140 may dissipate heat of the bearing 118 into the air.

The heat dissipation fin 140 is disposed on one side of the bearing 118. The heat dissipation fin 140 is mounted on the rotational shaft 117. The heat dissipation fin 140 may be disposed on one side of the first bearing 118a or the second bearing 118b, or may be disposed on one side of each of the first bearing 118a and the second bearing 118b.

In the embodiment of the present disclosure, the heat dissipation fin 140 is disposed on one side of each of the first bearing 118a and the second bearing 118b. The heat dissipation fins 140 may include a first heat dissipation fin 140a and a second heat dissipation fin 140b.

The first heat dissipation fin 140a may be disposed on one side of the first bearing 118a. The second heat dissipation fin 140b may be disposed on one side of the second bearing 118b. The first heat dissipation fin 140a and the second heat dissipation fin 140b may be disposed on both sides of the rotational shaft 117 to face each other in the axial direction with the rotor 119 interposed therebetween.

The following description of the heat dissipation fin 140 may be equally applied to each of the first heat dissipation fin 140a and the second heat dissipation fin 140b, unless otherwise specified.

The heat dissipation fin 140 includes a ring portion 141 and a rotating blade 143. The rotating blade 143 may be provided in plurality. The heat dissipation fin 140 may further include a connection portion 142 connecting the plurality of rotating blades 143 together. In the embodiment of the present disclosure, the heat dissipation fin 140 includes the ring portion 141, the connection portion 142, and the plurality of rotating blades 143.

The connection portion 142 may be selectively applied. When the connection portion 142 is not disposed between the ring portion 141 and the plurality of rotating blades 143, the ring portion 141 may connect the plurality of rotating blades 143.

The ring portion 141 encloses the rotational shaft 117. The ring portion 141 may be formed in a cylindrical shape. A shaft coupling hole is formed inside the ring portion 141 to allow the rotational shaft 117 to be inserted therethrough. A diameter of the shaft coupling hole corresponds to a diameter of the rotational shaft 117. The ring portion 141 may be press-fitted to the rotational shaft 117.

The ring portion 141 is disposed to be in contact with one axial side surface of the bearing 118. The ring portion 141 may be in contact with the one axial side surface of the bearing 118. In particular, the ring portion 141 may come into contact with the inner ring of the bearing 118.

According to this, the ring portion 141 may transfer heat generated in the bearing 118 to the air through conduction. The ring portion 141 may improve heat dissipation performance of the bearing 118 by expanding a contact area with the air.

However, the ring portion 141 may not be supposed to be in contact with the bearing 118, and may alternatively be spaced apart from the one axial side surface of the bearing 118. In this case, the heat dissipation fin 140 does not receive heat of the bearing 118 through conduction of the ring portion 141, but the heat of the bearing 118 may be transferred to the air using convection of the rotating blades 143, which will be described later.

The ring portion 141 may transfer the heat of the bearing 118 to the rotating blades 143 to be described later using conduction.

An inner diameter of the ring portion 141 may correspond to the diameter of the rotational shaft 117. Here, the term "corresponding" may be understood as a concept including the meaning that objects to be compared are identical to each other. Accordingly, an inner circumferential surface of the ring portion 141 may be press-fitted to the rotational shaft 117.

An outer diameter of the ring portion 141 may be larger than an inner diameter of the bearing 118.

According to this configuration, as the ring portion 141 is press-fitted to the rotational shaft 117 while being brought into contact with the one axial side surface of the bearing 118, an axial movement of the bearing 118 may be restricted.

An inner diameter of the ring portion 141 may be larger than a length of the ring portion 141. According to this, the length of the ring portion 141 may be minimized to reduce the size of the heat dissipation fin 140. This can contribute to simplifying a structure and reducing a weight of the fan motor.

The first heat dissipation fin 140a may be mounted on the first bearing support portion 117b. The second heat dissipation fin 140b may be mounted on the second bearing support portion 117d. The ring portion 141 of the first heat dissipation fin 140a may enclose the first bearing support portion 117b, and the ring portion 141 of the second heat dissipation fin 140b may enclose the second bearing support portion 117d.

When the diameter of the first bearing support portion 117b is larger than the diameter of the first bearing support portion 117b, a diameter of the ring portion 141 of the first heat dissipation fin 140a may be larger than a diameter of the ring portion 141 of the second heat dissipation fin 140b.

The connection portion 142 may protrude radially from one axial end of the ring portion 141. The connection portion 141 may extend in the circumferential direction of the ring portion 141. The connection portion 142 is disposed between the ring portion 141 and the plurality of rotating blades 143. The connection portion 142 may connect the plurality of rotating blades.

The connection portion 142 may be formed in a disk shape having a predetermined thickness. One axial side and another axial side of the connection portion 142 are formed to be flat. An outer circumferential surface of the connection portion 142 is formed as a circular curved surface.

The rotating blades 143 are configured such that air is suctioned into the bearing 118. The rotating blades 143 are connected to the rotational shaft 117 through the ring portion 141 and the connection portion 142, to rotate together with the rotational shaft 117. According to this, the rotating blades 143 may transfer heat of the bearing 118 to the air using convection, thereby cooling the bearing 118.

The rotating blades 143 may be disposed on an outer circumferential surface of the connection portion 142. The rotating blades 143 may protrude radially outward from the outer circumferential surface of the connection portion 142.

The rotating blades 143 may be formed in a curved shape with a preset curvature on the outer circumferential surface of the connecting portion 142.

The rotating blades 143 may be inclined with respect to the axial direction. The rotating blades 143 may be inclined at a preset angle with respect to a flat surface of the connection portion 142.

An inclination angle of the rotating blade 143 may differ as it goes in the axial direction. For example, the inclination angle of the rotating blade 143 may further increase from an upper surface of the connection portion 142 toward the ring portion 141.

Here, a lower surface of the connection portion 142 indicates a surface that is disposed to face one axial side surface of the bearing 118. The upper surface of the connection portion 142 indicates a surface that faces an opposite direction to the bearing 110.

The rotating blades 143 may be formed in a flexure plate shape having a preset thickness. The thickness of the rotating blade 143 may be thicker than a thickness of the connection portion 142.

An upper end portion of the rotating blade 143 may protrude upward from an upper end of the connection portion 142. A lower end portion of the rotating blade 143 may protrude downward from a lower end of the connection portion 142.

However, a lower end of the rotating blade 143 is spaced apart by a preset height from a lower end of the ring portion 141 in the axial direction.

The lower end of each of the plurality of rotating blades 143 may be spaced apart by the same height from the lower end of the ring portion 141 in the axial direction.

The plurality of rotating blades 143 may be spaced apart from one another along the outer circumferential surface of the connection portion 142 in the circumferential direction.

A circumferential length of the rotating blade 143 may be longer than a circumferential distance between two adjacent rotating blades 143 in the circumferential direction.

The two rotating blades 143 adjacent in the circumferential direction may be disposed not to overlap each other in the axial direction. This can simplify the structure of the rotating blades 143 and reduce a manufacturing cost.

If the two rotating blades 143 adjacent in the circumferential direction are disposed to overlap each other in the axial direction, the manufacturing cost may increase due to a complicated structure during molding and processing of the heat dissipation fin 140.

The circumferential distance between the two rotating blades 143 adjacent in the circumferential direction may differ from inside toward outside in the radial direction.

For example, one circumferential side surface of the rotating blade 143 may extend in the radial direction, and another circumferential side surface of the rotating blade 143 may extend obliquely at a preset angle with respect to the radial direction.

A circumferential distance between one side surface of one of the two rotating blades 143 adjacent in the circumferential direction and another side surface of another rotating blade 143 of the two adjacent rotating blades 143 may gradually increase toward a radial outside on the outer circumferential surface of the connection portion 142.

One side surface of one of the two rotating blades 143 adjacent in the circumferential direction and another side surface of another rotating blade may be disposed to be adjacent to each other on the outer circumferential surface of the connection portion 142 in the circumferential direction.

A distance between radial outer ends of the two rotating blades 143 adjacent in the circumferential direction is longer than a distance between radial inner ends thereof, between the one side surface of the one of the two adjacent rotating blades 143 and the another side surface of the another rotating blade.

This can facilitate processing and molding of the rotating blades 143.

The rotating blades 143 may be disposed directly on the outer circumferential surface of the ring portion 141 other than the connection portion 142 in another embodiment.

If the plurality of rotating blades 143 are provided on the outer circumferential surface of the ring portion 141, the connection portion 142 may be omitted. This may provide an advantage of simplifying the structure. On the other hand, the length of the ring portion 141 is increased to secure bearing capacity of the rotating blades 143, and a protrusion length of the rotating blades 143 in the radial direction is increased to induce a rotational flow of air. This brings about a disadvantage of increasing the weight of the heat dissipation fin 140.

When the plurality of rotating blades 143 are disposed on the outer circumferential surface of the connection portion 142, the length of the ring portion 141 does not need to extend to secure the bearing capacity of the rotating blades 143. In addition, the protrusion length of the rotating blades 143 in the radial direction may be minimized to induce the rotational flow of air.

Hereinafter, operation and effect of the heat dissipation fin 140 will be described.

The first ring portion 141a of the first heat dissipation fin 140a is disposed to be in contact with one axial side surface of the first bearing 118a. Here, the one axial side surface of the first bearing 118a indicates a surface opposite to the impeller 108. Referring to FIG. 4, the one axial side surface of the first bearing 118a indicates a lower surface of the first bearing 118a.

The first connection portion 142a of the first heat dissipation fin 140a protrudes radially outward from a lower end of the first ring portion 141a.

The first rotating blade 143a of the first heat dissipation fin 140a is provided in plurality. The plurality of first rotating blades 143a are spaced apart from one another on the outer circumferential surface of the first connection portion 142a along the circumferential direction. The plurality of first rotating blades 143a protrude radially outward from the outer circumferential surface of the first connection portion 142a. The first rotating blades 143a are inclined at a preset angle with respect to the axial direction.

Referring to FIG. 4, the blades 1082 of the impeller 108 are inclined from an upper right side of the hub 1081 to a lower left side with respect to the axial direction.

Each of the plurality of first rotating blades 143a is inclined from an upper left side of the ring portion 141 to a lower right side with respect to the axial direction.

According to this configuration, air suctioned by the impeller 108 flows in a first axial direction from upper side to lower side of the impeller 108.

Air suctioned by the rotation of the first rotating blades 143a of the first heat dissipation fin 140a flows in a second axial direction, which is opposite to the first axial direction, from lower side to upper side of the first heat dissipation fin 140a.

As the first rotating blades 143a blow air to the first bearing 118a which is located above the first heat dissipation fin 140a, heat of the first bearing 118a may be efficiently cooled by using convection.

An air flow direction induced by the rotating blades 143 of the first heat dissipation fin 140a is opposite to an air flow direction induced by the blades 1082 of the impeller 108.

The first rotating blades 143a allow air to flow in the opposite direction to the flow direction of the air suctioned by the impeller 108, thereby offsetting thrust generated by the impeller 108.

The first bearing 118a and the first heat dissipation fin 140a are disposed between the cover portion 111 of the vane hub 110 and an upper surface of the motor unit. The cover portion 111 of the vane hub 110 covers the first bearing 118a and the first heat dissipation fin 140a.

Due to this, the air suctioned by the impeller 108 bypasses the first bearing 118a and the first heat dissipation fin 140a to move to the outside of the vane hub 110.

Accordingly, the first rotating blades 143a are not affected by the air flow by the impeller 108 even if the air flow direction o is opposite to the flow direction of the air suctioned by the impeller 108, and may easily blow the air inside the vane hub 110 toward the bearing 118.

Meanwhile, the second ring portion 141b of the second heat dissipation fin 140b is disposed to be in contact with another axial side surface of the second bearing 118b. Here, referring to FIG. 4, the another axial side surface of the second bearing 118b indicates a surface facing one axial side surface of the motor unit. The another axial side surface of the second bearing 118b indicates the upper surface of the second bearing 118b. The one axial side surface of the motor unit indicates a lower surface of the motor unit.

The second connection portion 142b of the second heat dissipation fin 140b protrudes radially outward from the upper end of the second ring portion 141b.

The second rotating blade 143b of the second heat dissipation fin 140b is provided in plurality. The plurality of second rotating blades 143b are spaced apart from one another on the outer circumferential surface of the second connection portion 142b in the circumferential direction. The plurality of second rotating blades 143b protrude radially outward from the outer circumferential surface of the second connection portion 142b. The second rotating blades 143b are inclined at a preset angle with respect to the axial direction.

Referring to FIG. 4, each of the plurality of second rotating blades 143b is inclined from an upper right side of the ring portion 141 to a lower left side with respect to the axial direction.

According to this configuration, air suctioned by the rotation of the second rotating blade 143b of the second heat radiation fin 140b flows in the first axial direction from the upper side to the lower side of the second heat radiation fin 140b.

As the second rotating blades 143b blow air to the second bearing 118b which is located below the second heat dissipation fin 140b, heat of the second bearing 118b may be efficiently cooled by using convection.

An air flow direction induced by the second rotating blades 143b of the second heat dissipation fin 140a is the same as the air flow direction induced by the blades 1082 of the impeller 108.

According to this configuration, the air suctioned by the impeller 108 may be introduced into the vane hub 110 through the openings 116 via the vanes 109. In the inner flow of the vane hub 110, air that has passed through the motor unit, namely, a space between the plurality of coils 123 adjacent to each other in the circumferential direction is suctioned by the second rotating blades 143b to flow toward the second bearing 118b.

The flow direction of the air suctioned by the second rotating blades 143b is the same as the flow direction of the air suctioned by the impeller 108. This facilitates the air that has passed through the motor unit to move toward the second rotating blades 143b.

In addition, air intake force of the second rotating blades 143b may increase a flow velocity of the air inside the vane hub 110, thereby increasing a total flow velocity and flow rate during operation of the fan motor.

Therefore, according to the present disclosure, the heat dissipation fin 140 includes the ring portion 141 and the plurality of rotating blades 143. The heat dissipation fin 140 is formed of a metal material having a high heat transfer coefficient. The ring portion 141 is mounted on the rotational shaft 117 to be in contact with one axial side surface of the bearing 118. The plurality of rotating blades 143 are disposed on the outer circumferential surface of the ring portion 141 or the connection portion 142 in the circumferential direction. The plurality of rotating blades 143 rotate together with the rotational shaft 117 centering on the ring portion 141. The plurality of rotating blades 143 form a rotational flow of air. Casings such as the bearing housings 113 and 128 are made of a plastic material. Thus, even if a considerably large amount of heat is generated in the bearing 118, the plurality of rotating blades 143 blow air toward the bearing 118 using convection, so as to effectively cool the bearing 118. The ring portion 141 may transfer the heat of the bearing 118 into the air using conduction. The ring portion 141 may restrict an axial movement of the bearing 118.

In addition, the heat dissipation fin 140 may expand a contact area with air to increase a heat dissipation area of the bearing 118 and improve cooling performance of the bearing 118. This can solve a problem of heat generated in the bearing 118 of a high-speed fan motor using a plastic housing.

In addition, the heat dissipation fin 140 includes the ring portion 141 formed in the cylindrical shape and enclosing the rotational shaft 117, the connection portion 142 formed in the disk shape and protruding radially from the axial one end portion of the ring portion 141, and the plurality of rotating blades 143 protruding radially from the outer circumferential surface of the connection portion 412 to be inclined with respect to the axial direction. The heat dissipation fin 140 of this configuration may greatly expand the heat dissipation area while having a simple structure.

In addition, the ring portion 141 is formed shorter in length than its diameter. The plurality of rotating blades 143 protrude in the up and down direction from one axial side surface and another axial side surface of the connection portion 142. The plurality of rotating blades 143 adjacent to each other in the circumferential direction are disposed so as not to overlap each other in the axial direction. According to this configuration, the radial protrusion length and the circumferential length of the rotating blades may be shortened, which may greatly contribute to reducing the size and weight of the fan motor.

Hereinafter, an assembly sequence of the fan motor will be described. After the impeller 108 is assembled to the rotational shaft 117, the vane hub 110 and the first bearing 118a are assembled to the first bearing support portion 117b of the rotational shaft 117. The first heat dissipation fin 140a fixes the position of the first bearing 118a. Subsequently, the stator 121 of the motor unit is fixed to the inside of the vane hub 110, and the permanent magnet 120 of the rotor 119 is fixed to the magnet support portion 117c of the rotational shaft 117. The second bearing 118b is assembled to the second bearing housing 128 of the second housing 100b. Thereafter, the second heat dissipation fin 140b is press-fitted to the second bearing support portion 117d, and then the second bearing 118b is assembled to the rotational shaft 117 such that the upper surface thereof is brought into contact with the second ring portion 141b of the second heat dissipation fin 140b.

The ring portion 141 of the heat dissipation fin 140 is press-fitted to the rotational shaft 117 so as to be in contact with one axial side surface of the bearing 118. The heat dissipation fin 140 may restrict an axial movement of the bearing 118. During the assembly of the fan motor described above, the heat dissipation fin 140 fixes the position of the bearing 118 in the axial direction, thereby facilitating the assembly of the fan motor.

### 3. Description of configuration of fan motor according to another embodiment

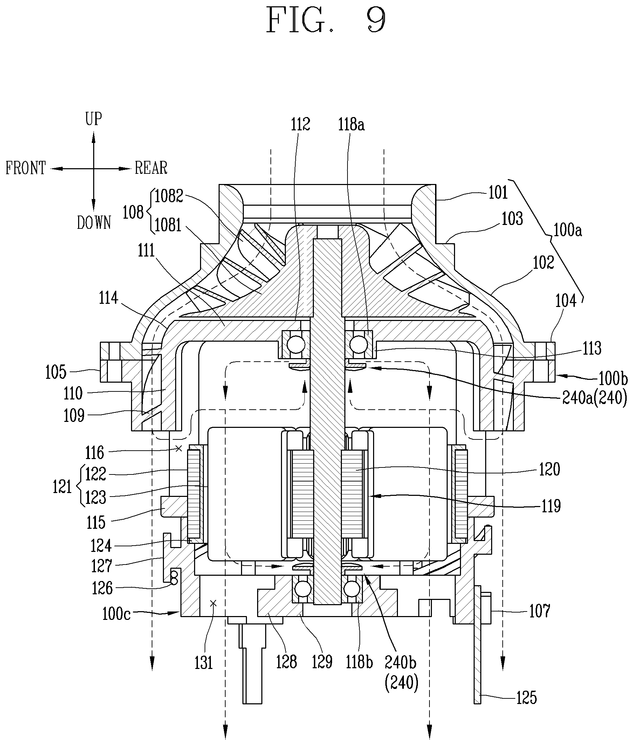

FIG. 9 is a sectional view illustrating a fan motor having a heat dissipation fin 240 in accordance with another embodiment of the present disclosure.

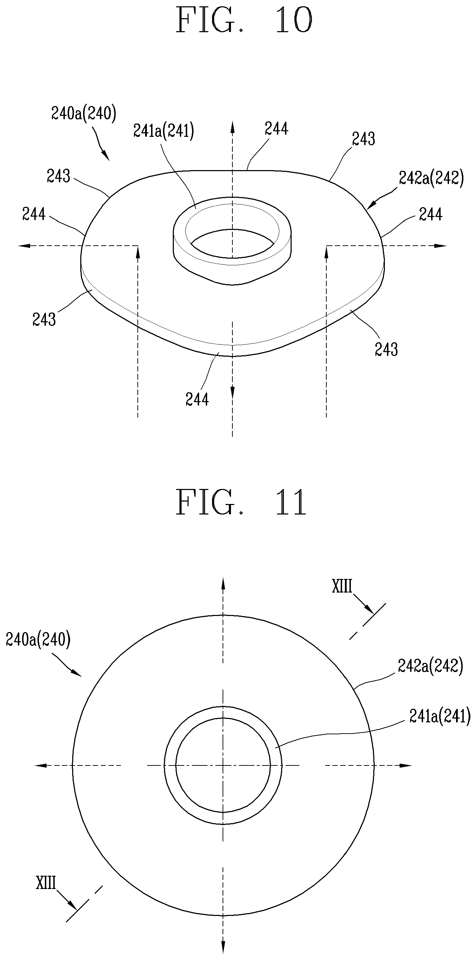

FIG. 10 is a perspective view illustrating a structure of the heat dissipation fin 240 in FIG. 9.

FIG. 11 is a planar view illustrating the heat dissipation fin 240 of FIG. 10, viewed from a top.

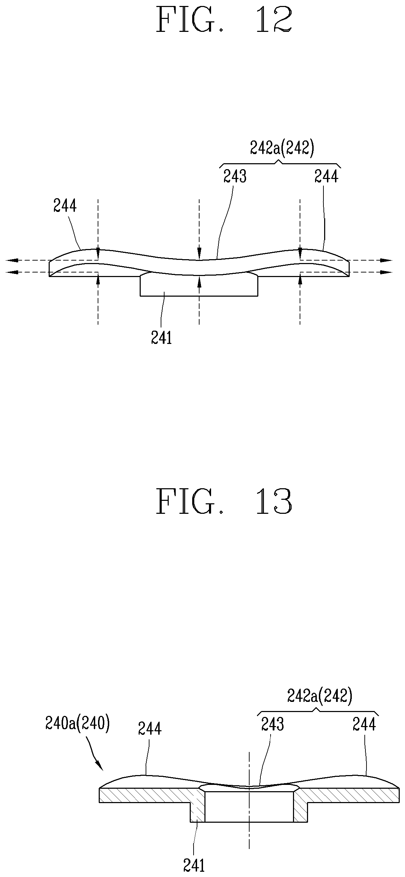

FIG. 12 is a planar view illustrating the heat dissipation fin 240 of FIG. 11, viewed from a top.

FIG. 13 is a sectional view, taken along a line XIII-XIII in FIG. 11.

This embodiment is different from the embodiment of FIGS. 1 to 8 in view of shape and structure of the heat dissipation fin 240.
the following description of the heat dissipation fin 240 may also be equally applied even to the configurations of a first heat dissipation fin 240a and a second heat dissipation fin 240b.

A heat dissipation fin 240 according to another embodiment of the present disclosure includes a ring portion 241 and a flexure plate 242.

Since the ring portion 241 is the same as or similar to the ring portion 241 according to the previous embodiment illustrated in FIGS. 1 to 8, a redundant description will be omitted and differences will be mainly described.

The flexure plate 242 protrudes radially from one end of the ring portion 241 in the axial direction. The flexure plate 242 may be formed in a circular shape when viewed from top. A diameter of the flexure plate 242 is larger than a diameter of the ring portion 241.

A shaft coupling hole is formed through a central portion of the flexure plate 242. A diameter of the shaft coupling hole of the flexure plate 242 may be the same as a diameter of a shaft coupling hole of the ring portion 241.

The flexure plate 242 may be formed in a wavy shape. The flexure plate 242 includes a convex portion 243 and a concave portion 244. The convex portion 243 and the concave portion 244 have a preset curvature and are formed in a curved shape.

Referring to FIG. 9, the convex portion 243 is convex upward. The concave portion 244 is concave downward. The convex portion 243 and the concave portion 244 may be alternately disposed along the circumferential direction in a consecutive manner.

Each of the convex portion 243 and the concave portion 244 may be provided in plurality. In the another embodiment of the present disclosure, four convex portions 243 and four concave portions 244 may be disposed. However, the numbers of the convex portion 243 and the concave portion 244 are not limited thereto.

The plurality of convex portions 243 and the plurality of concave portions 244 may be alternately disposed along the circumferential direction. The plurality of convex portions 243 and the plurality of concave portions 244 may be alternately spaced apart from each other at equal intervals.

The convex portion 243 and the concave portion 244 may be relative to each other. The convex portion 243 and the concave portion 244 are merely different from each other in a curved direction.

For example, on an upper surface of the flexure plate 242, the convex portion 243 may be convex upward from the upper surface of the flexure plate 242 while the concave portion 244 may be concave downward from the upper surface of the flexure plate 242.

On the other hand, on a lower surface of the flexure plate 242, the convex portion 243 may be convex downward from the lower surface of the flexure plate 242 while the concave portion 244 may be concave upward from the lower surface of the flexure plate 242.

The upper surface of the flexure plate 242 may be defined as a surface in contact with the ring portion 241. The lower surface of the flexure plate 242 may be defined as a surface facing a direction opposite to a protruding direction of the ring portion 241.

In this embodiment, it is illustrated that the convex portion 243 is convex upward from the upper surface of the flexure plate 242 toward the ring portion 241. It is also illustrated that the concave portion 244 is concave downward from the upper surface of the flexure plate 242 in the direction opposite to the protruding direction of the ring portion 241.

The heat dissipation fins 240 may include a first heat dissipation fin 240a and a second heat dissipation fin 240b. The first heat dissipation fin 240a is disposed beneath the first bearing 118a. The first heat dissipation fin 240a cools heat of the first bearing 118a using conduction and convection.

The second heat dissipation fin 240b is disposed above the second bearing 118b. The second heat dissipation fin 240b may cool heat of the second bearing 118b.

A first ring portion 241a of the first heat dissipation fin 240a is disposed to be in contact with a lower surface of the first bearing 118a. The first ring portion 241a may alternatively be disposed to be spaced apart from the lower surface of the first bearing 118a in the axial direction. However, when the first ring portion 241a is in contact with the first bearing 118a, heat generated in the first bearing 118a may be emitted to the air through conduction, thereby improving cooling performance of the bearing 118.

A first flexure plate 242a of the first heat dissipation fin 240a is spaced apart from the lower surface of the first bearing 118a in the axial direction.

A second ring portion 241b of the second heat dissipation fin 240b is disposed to be in contact with an upper surface of the second bearing 118b. The second ring portion 241b may alternatively be disposed to be spaced apart from the upper surface of the second bearing 118b in the axial direction. However, when the second ring portion 241b is in contact with the second bearing 118b, heat generated in the second bearing 118b may be emitted to the air through conduction, thereby improving the cooling performance of the bearing 118.

A second flexure plate 242b of the second heat dissipation fin 240b is spaced apart from an upper surface of the first bearing 118a in the axial direction.

Hereinafter, operations and effects of the heat dissipation fin 240 according to the embodiment of the present disclosure will be described.

The heat dissipation fin 240 according to the embodiment of the present disclosure may suction air in both directions based on the flexure plate 242.

The upper surface of the flexure plate 242 may be defined by upper surfaces of the convex portions 243 and upper surfaces of the concave portions 244 that are disposed alternately and consecutively in the circumferential direction.

The lower surface of the flexure plate 242 may be defined by lower surfaces of the convex portions 243 and lower surfaces of the concave portions 244 that are disposed alternately and consecutively in the circumferential direction.

Both the upper and lower surfaces of the flexure plate 242 change in curvature along the circumferential direction.

Accordingly, when the flexure plate 242 rotates together with the rotational shaft 117, air flows occur on the upper and lower surfaces of the flexure plate 242, respectively.

When the convex portion 243 and the concave portion 244 formed on the upper surface of the flexure plate 242 rotate, air in contact with the upper surface of the flexure plate 242 is rotated by the convex portion 243 and the concave portion 244. A flow velocity of the air in contact with the upper surface of the flexure plate 242 is increased.

According to this, pressure of the air in contact with the upper surface of the flexure plate 242 is lowered. Since pressure of surrounding air adjacent to the upper surface of the flexure plate 242 is relatively high, the surrounding air moves toward the upper surface of the flexure plate 242.

In addition, the air moved to the flexure plate 242 moves from inside to outside of the upper surface of the flexure plate 242 in the radial direction by centrifugal force.

This phenomenon also occurs on the lower surface of the flexure plate 242.

Accordingly, the surrounding air adjacent to the upper and lower surfaces of the flexure plate 242 flows toward the convex portion 243 and the concave portion 244 of the flexure plate 242 in opposite directions. That is, due to the rotation of the flexure plate 242, the air around the flexure plate 242 has bidirectionality on the upper and lower surfaces of the flexure plate 242 and causes counterflow (flows in opposite directions).

Heat generated in the bearing 118 is transferred to the flexure plate 242 through conduction of the ring portion 241. The flexure plate 242 may expand a contact area with air through the change in the curved surfaces of the convex portion 243 and the concave portion 244.

The flexure plate 242 rotates together with the rotational shaft 117 and forms convection of surrounding air, thereby maximizing heat dissipation performance of the bearing 118.

Since other components and operations are the same as or similar to those in the previous embodiment of FIGS. 1 to 8, a redundant description will be omitted.

### 4. Description of configuration of fan motor according to still another embodiment

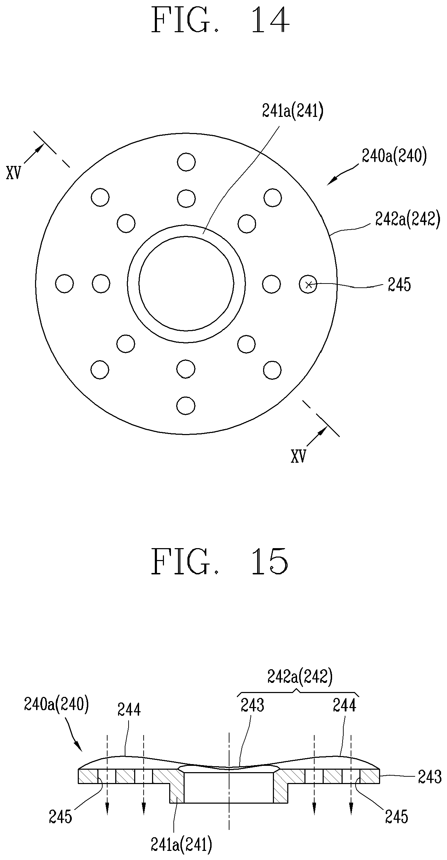

FIG. 14 is a planar view illustrating a heat dissipation fin 240 in accordance with still another embodiment of the present disclosure, viewed from a top.

FIG. 15 is a sectional view taken along a line XV-XV in FIG. 14.

This embodiment is different from the previous embodiment of FIGS. 9 to 13 in that a flow hole 245 is additionally formed in the flexure plate 242.

The flow hole 245 may be provided in plurality. The plurality of flow holes 245 may be formed through the flexure plate 242 in the axial direction.

The plurality of flow holes 245 may be spaced apart at intervals in the circumferential direction. The plurality of flow holes 245 may be spaced apart at intervals in the radial direction.

The plurality of flow holes 245 may be formed at the highest points of the convex portions 243 or the lowest points of the concave portions 244. The plurality of flow holes 245 may be located at the same height in the axial direction based on a lower end of the ring portion 241.

However, the position of the flow hole 245 is not limited to the highest point of the convex portion 243 or the lowest point of the concave portion 244, and the flow hole 245 may be located at any position as long as air can pass the flexure plate 242 therethrough.

According to this configuration, the flow hole 245 may allow air to flow on the upper or lower surface of the flexure plate 242 when the flexure plate 242 rotates.

An air pressure difference may occur between the upper and lower surfaces of the flexure plate 242. The plurality of flow holes 245 may move air around the flexure plate 242 to the bearing 118.

The plurality of flow holes 245 may allow air around the flexure plate 242 to move to the bearing 118 through the flexure plate 242, thereby further improving the cooling performance of the bearing 118.

Since other components are the same as or similar to those in the previous embodiments of FIGS. 1 to 13, a redundant description will be omitted.

## Claims

1. A fan motor comprising:
a rotational shaft (117) on which an impeller (108) is mounted;
a motor unit including a rotor (119) connected to the rotational shaft (117) and a stator (121) enclosing the rotor (119), the motor unit driving the rotational shaft (119);
a bearing (118) supporting the rotational shaft (117);
a bearing housing (128) surrounding the bearing (118); and
a heat dissipation fin (140) disposed to face one axial side surface of the bearing (118) and mounted on the rotational shaft (117),
wherein the heat dissipation fin (140, 240) includes a rotating blade (143) configured to rotate centering on the rotational shaft (117) to blow air to the bearing (118),
**characterized in that** the heat dissipation fin (140) is disposed to be in contact with the one axial side surface of the bearing (118), wherein the bearing housing (128) is formed of a plastic material and the heat dissipating fin (140) of a metal material.

2. The fan motor of claim 1, wherein the heat dissipation fin (140) comprises:
a ring portion (141) enclosing the rotational shaft (117) and coupled to the rotational shaft (117); and
the rotating blade (143) provided in plurality, preferably disposed on an outer circumferential surface of the ring portion (141).

3. The fan motor of claim 2, wherein the heat dissipation fin (140) further comprises:
a connection portion (142) protruding in a radial direction from one axial end portion of the ring portion (141), and
the rotating blade (143) provided in plurality on an outer circumferential surface of the connection portion to be spaced apart from one another.

4. The fan motor of any one of claims 1 to 3, wherein the rotating blade (143) is disposed to be inclined at a preset angle with respect to an axial direction.

5. The fan motor of any one of claims 1 to 4, wherein the rotating blade (143) protrudes outward in a radial direction of the rotational shaft (117).

6. The fan motor of any one of claims 1 to 5, wherein the rotating blade (143) is formed in a curved shape having a preset curvature in a circumferential direction and an axial direction of the rotational shaft (117).

7. The fan motor of any one of claims 1 to 6,
wherein the heat dissipation fin (240) comprises a flexure plate (242) configured to rotate centering on the rotational shaft.

8. The fan motor of claim 7, wherein the heat dissipation fin (240) comprises:
a ring portion (241) enclosing the rotational shaft (117) and coupled to the rotational shaft (117), and
the flexure plate (242) protruding in a radial direction from an outer circumferential surface of the ring portion (241) and extending in a circumferential direction,
wherein the flexure plate (242) includes convex portions (243) and concave portions (244) that are opposite to each other in direction of curvature,
wherein the convex portions (243) and the concave portions (244) are alternately arranged along the circumferential direction of the flexure plate (242).

9. The fan motor of claim 8, wherein the ring portion (241) protrudes from one axial side surface of the flexure plate (242) in an axial direction, and the ring portion (241) is disposed to be in contact with the one axial side surface of the bearing (118),
the convex portion (243) is formed to be convex in a protruding direction of the ring portion (241), and
the concave portion (244) is formed to be concave in an opposite direction to the protruding direction of the ring portion (241).

10. The fan motor of any one of claims 7 to 9, wherein the flexure plate (242) includes a plurality of flow holes (245) formed therethrough in an axial direction.

11. The fan motor of any one of claims 1 to 10, wherein the bearing (118) is provided in plurality to support both sides of the rotational shaft (117) with the rotor interposed therebetween, and
wherein the heat dissipation fin (140, 240) is provided in plurality, comprising:
a first heat dissipation fin (240a) disposed at one axial side of a first bearing (118a), adjacent to the impeller (108), of the plurality of bearings; and
a second heat dissipation fin (140a, 240a) disposed at one axial side of a second bearing (118b), spaced apart from the first bearing (118a) in an opposite direction to the impeller (108), of the plurality of bearings,
wherein the first heat dissipation fin (140a, 240a) is disposed to be in contact with a downstream side surface of the first bearing (118a) based on an air flow direction, and
the second heat dissipation fin (140b, 240b) is disposed to be in contact with an upstream side surface of the second bearing (118b) based on the air flow direction.

12. The fan motor of claim 11, further comprising a casing surrounding the stator and accommodating the rotational shaft inserted through a center of the stator,
wherein the casing comprises:
a first housing (100a) in which the impeller (108) is accommodated;
a second housing (100b) coupled to a downstream side of the first housing (100a) based on a flow direction of air suctioned by the impeller (108);
a vane hub (110) disposed on a downstream side of the impeller (108) based on the flow direction of the air;
a plurality of vanes (109) extending to protrude from an outer circumferential surface of the vane hub (110) toward an inner circumferential surface of the first housing (100a) or the second housing (100b); and
a third housing (100c) coupled to a downstream side of the vane hub (110) based on the flow direction of the air and having the stator mounted therein,
wherein the third housing (100c) comprises:
a second bearing housing (128) extending in an axial direction to enclose the second bearing (118b); and
a bridge (130) extending in a radial direction from an outer circumferential surface of the second bearing housing (128) toward an inner circumferential surface of the third housing (100c) to connect the second bearing housing (128) and the third housing (100c),
wherein the first heat dissipation fin (140a) is disposed to be accommodated inside the vane hub (110), and
the second heat dissipation fin (140b) is disposed to be accommodated inside the third housing (100c).

13. The fan motor of claim 12, wherein the vane hub (110) comprises:
a cover portion (111) extending radially from one axial end portion of the vane hub (110) and disposed between the impeller (108) and the first bearing (118a),
a first bearing housing (113) protruding axially from an inside of the cover portion (111) to enclose the first bearing (118a); and
an axial movement restricting portion (129) protruding radially from the inside of the cover portion (111) to be in contact with an upstream side surface of the first bearing (118a).

14. The fan motor of any one of claims 11 to 13, wherein the rotational shaft (117) comprises:
a first bearing support portion (117a) to support the first bearing (118a), and
a second bearing support portion (117b) to support the second bearing (118b), and
a diameter of the first bearing support portion (117a) is larger than a diameter of the second bearing support portion (117b).

## Patentansprüche

1. Lüftermotor, aufweisend:
eine Rotationswelle (117), auf der ein Laufrad (108) montiert ist;
eine Motoreinheit, die einen Rotor (119) aufweist, der mit der Rotationswelle (117) verbunden ist, und einen Stator (121), der den Rotor (119) umschließt, wobei die Motoreinheit die Rotationswelle (119) antreibt;
ein Lager (118), das die Rotationswelle (117) lagert;
ein Lagergehäuse (128), das das Lager (118) umgibt; und
eine Wärmeableitrippe (140), die so angeordnet ist, dass sie einer axialen Seitenfläche des Lagers (118) zugewandt ist, und die auf der Rotationswelle (117) montiert ist,
wobei die Wärmeableitrippe (140, 240) eine Rotationsschaufel (143) aufweist, die so ausgebildet ist, dass sie mit Zentrierung auf die Rotationswelle (117) rotiert, um Luft zu dem Lager (118) zu blasen,
**dadurch gekennzeichnet, dass** die Wärmeableitrippe (140) so angeordnet ist, dass sie mit der einen axialen Seitenfläche des Lagers (118) in Kontakt ist, wobei das Lagergehäuse (128) aus einem Kunststoffmaterial und die Wärmeableitrippe (140) aus einem Metallmaterial gebildet sind.

2. Lüftermotor nach Anspruch 1, wobei die Wärmeableitrippe (140) aufweist:
einen Ringabschnitt (141), der die Rotationswelle (117) umschließt und mit der Rotationswelle (117) gekoppelt ist; und
die Rotationsschaufel (143), mehrfach bereitgestellt, bevorzugt auf einer äußeren Umfangsfläche des Ringabschnitts (141) angeordnet.

3. Lüftermotor nach Anspruch 2, wobei die Wärmeableitrippe (140) ferner aufweist:
einen Verbindungsabschnitt (142), der in radialer Richtung von einem axialen Endabschnitt des Ringabschnitts (141) vorsteht; und die Rotationsschaufel (143), mehrfach bereitgestellt, auf einer äußeren Umfangsfläche des Verbindungsabschnitts bereitgestellt, um voneinander beabstandet zu sein.

4. Lüftermotor nach einem der Ansprüche 1 bis 3, wobei die Rotationsschaufel (143) so angeordnet ist, dass sie in einem vorgegebenen Winkel in Bezug auf eine axiale Richtung geneigt ist.

5. Lüftermotor nach einem der Ansprüche 1 bis 4, wobei die Rotationsschaufel (143) nach außen in einer radialen Richtung der Rotationswelle (117) vorsteht.

6. Lüftermotor nach einem der Ansprüche 1 bis 5, wobei die Rotationsschaufel (143) in einer gekrümmten Form gebildet ist, die eine vorgegebene Krümmung in einer Umfangsrichtung und einer axialen Richtung der Rotationswelle (117) aufweist.

7. Lüftermotor nach einem der Ansprüche 1 bis 6,
wobei die Wärmeableitrippe (240) eine Biegeplatte (242) aufweist, die so ausgebildet ist, dass sie mit Zentrierung auf die Rotationswelle rotiert.

8. Lüftermotor nach Anspruch 7, wobei die Wärmeableitrippe (240) aufweist:
einen Ringabschnitt (241), der die Rotationswelle (117) umschließt und mit der Rotationswelle (117) gekoppelt ist; und
die Biegeplatte (242), die in radialer Richtung von einer äußeren Umfangsfläche des Ringabschnitts (241) vorsteht und sich in einer Umfangsrichtung erstreckt,
wobei die Biegeplatte (242) konvexe Abschnitte (243) und konkave Abschnitte (244) aufweist, die einander in Krümmungsrichtung gegenüberliegen,
wobei die konvexen Abschnitte (243) und die konkaven Abschnitte (244) abwechselnd entlang der Umfangsrichtung der Biegeplatte (242) angeordnet sind.

9. Lüftermotor nach Anspruch 8, wobei der Ringabschnitt (241) von einer axialen Seitenfläche der Biegeplatte (242) in einer axialen Richtung vorsteht, und der Ringabschnitt (241) so angeordnet ist, dass er mit der einen axialen Seitenfläche des Lagers (118) in Kontakt ist,
der konvexe Abschnitt (243) derart gebildet ist, dass er konvex in einer Vorstehrichtung des Ringabschnitts (241) ist, und
der konkave Abschnitt (244) derart gebildet ist, dass er konkav in einer entgegengesetzten Richtung zur Vorstehrichtung des Ringabschnitts (241) ist.

10. Lüftermotor nach einem der Ansprüche 7 bis 9, wobei die Biegeplatte (242) mehrere Strömungsöffnungen (245) aufweist, die darin in axialer Richtung ausgebildet sind.

11. Lüftermotor nach einem der Ansprüche 1 bis 10, wobei das Lager (118) mehrfach bereitgestellt ist, um beide Seiten der Rotationswelle (117) mit dazwischen angeordnetem Rotor zu stützen, und
wobei die Wärmeableitrippe (140, 240) mehrfach bereitgestellt ist und aufweist:
eine erste Wärmeableitrippe (240a), die an einer axialen Seite eines ersten Lagers (118a) der mehreren Lager angeordnet ist, benachbart zu dem Laufrad (108); und
eine zweite Wärmeableitrippe (140a, 240a), die an einer axialen Seite eines zweiten Lagers (118b) der mehreren Lager angeordnet ist, das von dem ersten Lager (118a) in einer entgegengesetzten Richtung zu dem Laufrad (108) beabstandet ist,
wobei die erste Wärmeableitrippe (140a, 240a) so angeordnet ist, dass sie mit einer stromabwärtigen Seitenfläche des ersten Lagers (118a) basierend auf einer Luftströmungsrichtung in Kontakt ist, und
die zweite Wärmeableitrippe (140b, 240b) so angeordnet ist, dass sie mit einer stromaufwärtigen Seitenfläche des zweiten Lagers (118b) basierend auf der Luftströmungsrichtung in Kontakt ist.

12. Lüftermotor nach Anspruch 11, ferner aufweisend ein Gehäuse, das den Stator umgibt und die Rotationswelle aufnimmt, die durch ein Zentrum des Stators hindurch eingesetzt ist,
wobei das Gehäuse aufweist:
ein erstes Gehäuse (100a), in dem das Laufrad (108) aufgenommen ist;
ein zweites Gehäuse (100b), das an einer stromabwärtigen Seite des ersten Gehäuses (100a) basierend auf einer Strömungsrichtung von durch das Laufrad (108) angesaugter Luft gekoppelt ist;
eine Leitradnabe (110), die an einer stromabwärtigen Seite des Laufrads (108) basierend auf der Strömungsrichtung der Luft angeordnet ist;
mehrere Leitschaufeln (109), die sich erstrecken, um von einer äußeren Umfangsfläche der Leitradnabe (110) in Richtung zu einer inneren Umfangsfläche des ersten Gehäuses (100a) oder des zweiten Gehäuses (100b) vorzustehen; und
ein drittes Gehäuse (100c), das an einer stromabwärtigen Seite der Leitradnabe (110) basierend auf der Strömungsrichtung der Luft gekoppelt ist und in dem der Stator montiert ist,
wobei das dritte Gehäuse (100c) aufweist:
ein zweites Lagergehäuse (128), das sich in einer axialen Richtung erstreckt, um das zweite Lager (118b) zu umschließen; und
einen Steg (130), der sich in einer radialen Richtung von einer äußeren Umfangsfläche des zweiten Lagergehäuses (128) in Richtung zu einer inneren Umfangsfläche des dritten Gehäuses (100c) erstreckt, um das zweite Lagergehäuse (128) und das dritte Gehäuse (100c) zu verbinden,
wobei die erste Wärmeableitrippe (140a) so angeordnet ist, dass sie innerhalb der Leitradnabe (110) aufgenommen ist, und
die zweite Wärmeableitrippe (140b) so angeordnet ist, dass sie innerhalb des dritten Gehäuses (100c) aufgenommen ist.

13. Lüftermotor nach Anspruch 12, wobei die Leitradnabe (110) aufweist:
einen Abdeckabschnitt (111), der sich radial von einem axialen Endabschnitt der Leitradnabe (110) erstreckt und zwischen dem Laufrad (108) und dem ersten Lager (118a) angeordnet ist;
ein erstes Lagergehäuse (113), das axial von einem Inneren des Abdeckabschnitts (111) vorsteht, um das erste Lager (118a) zu umschließen; und
einen axialen Bewegungsbegrenzungsabschnitt (129), der radial von dem Inneren des Abdeckabschnitts (111) vorsteht, um mit einer stromaufwärtigen Seitenfläche des ersten Lagers (118a) in Kontakt zu sein.

14. Lüftermotor nach einem der Ansprüche 11 bis 13, wobei die Rotaytionswelle (117) aufweist:
einen ersten Lagerabschnitt (117a) zur Lagerung der ersten Lagers (118a); und
einen zweiten Lagerabschnitt (117b) zur Lagerung der zweiten Lagers (118b); und
ein Durchmesser des ersten Lagerabschnitts (117a) größer ist als ein Durchmesser des zweiten Lagerabschnitts (117b).

## Revendications

1. Moteur de ventilateur comprenant :
un arbre de rotation (117) sur lequel une roue (108) est montée ;
une unité moteur comprenant un rotor (119) connecté à l'arbre de rotation (117) et un stator (121) entourant le rotor (119), l'unité moteur entraînant l'arbre de rotation (119) ;
un roulement (118) supportant l'arbre de rotation (117) ;
un logement de roulement (128) entourant le roulement (118) ; et
une ailette de dissipation thermique (140) disposée de manière à faire face à une surface latérale axiale du roulement (118) et montée sur l'arbre de rotation (117),
dans lequel l'ailette de dissipation thermique (140, 240) comprend une pale rotative (143) configurée pour tourner en étant centrée sur l'arbre de rotation (117) afin de souffler de l'air vers le roulement (118),
**caractérisé en ce que** l'ailette de dissipation thermique (140) est disposée de manière à être en contact avec la surface latérale axiale du roulement (118), le logement de roulement (128) étant formé d'un matériau plastique et l'ailette de dissipation thermique (140) d'un matériau métallique.

2. Moteur de ventilateur selon la revendication 1, dans lequel l'ailette de dissipation thermique (140) comprend :
une portion annulaire (141) entourant l'arbre de rotation (117) et couplée à l'arbre de rotation (117) ; et
la pale rotative (143) fournie en pluralité, de préférence disposée sur une surface circonférentielle extérieure de la portion annulaire (141).

3. Moteur de ventilateur selon la revendication 2, dans lequel l'ailette de dissipation thermique (140) comprend en outre :
une portion de connexion (142) faisant saillie dans une direction radiale à partir d'une portion d'extrémité axiale de la portion annulaire (141) ; et la pale rotative (143) fournie en pluralité sur une surface circonférentielle extérieure de la portion de connexion de manière à être espacée les unes des autres.

4. Moteur de ventilateur selon l'une quelconque des revendications 1 à 3, dans lequel la pale rotative (143) est disposée de manière à être inclinée selon un angle prédéterminé par rapport à une direction axiale.

5. Moteur de ventilateur selon l'une quelconque des revendications 1 à 4, dans lequel la pale rotative (143) fait saillie vers l'extérieur dans une direction radiale de l'arbre de rotation (117).

6. Moteur de ventilateur selon l'une quelconque des revendications 1 à 5, dans lequel la pale rotative (143) est formée selon une forme courbe ayant une courbure prédéterminée dans une direction circonférentielle et une direction axiale de l'arbre de rotation (117).

7. Moteur de ventilateur selon l'une quelconque des revendications 1 à 6,
dans lequel l'ailette de dissipation thermique (240) comprend une plaque flexible (242) configurée pour tourner en étant centrée sur l'arbre de rotation.

8. Moteur de ventilateur selon la revendication 7, dans lequel l'ailette de dissipation thermique (240) comprend :
une portion annulaire (241) entourant l'arbre de rotation (117) et couplée à l'arbre de rotation (117) ; et
la plaque flexible (242) faisant saillie dans une direction radiale à partir d'une surface circonférentielle extérieure de la portion annulaire (241) et s'étendant dans une direction circonférentielle,
dans lequel la plaque flexible (242) comprend des portions convexes (243) et des portions concaves (244) qui sont opposées l'une à l'autre dans la direction de courbure,
dans lequel les portions convexes (243) et les portions concaves (244) sont disposées alternativement le long de la direction circonférentielle de la plaque flexible (242).

9. Moteur de ventilateur selon la revendication 8, dans lequel la portion annulaire (241) fait saillie à partir d'une surface latérale axiale de la plaque flexible (242) dans une direction axiale, et la portion annulaire (241) est disposée de manière à être en contact avec la surface latérale axiale du roulement (118),
la portion convexe (243) étant formée de manière à être convexe dans une direction de saillie de la portion annulaire (241), et
la portion concave (244) étant formée de manière à être concave dans une direction opposée à la direction de saillie de la portion annulaire (241).

10. Moteur de ventilateur selon l'une quelconque des revendications 7 à 9, dans lequel la plaque flexible (242) comprend une pluralité de trous d'écoulement (245) formés à travers celle-ci dans une direction axiale.

11. Moteur de ventilateur selon l'une quelconque des revendications 1 à 10, dans lequel le roulement (118) est fourni en pluralité pour supporter les deux côtés de l'arbre de rotation (117) avec le rotor interposé entre eux, et
dans lequel l'ailette de dissipation thermique (140, 240) est fournie en pluralité, comprenant :
une première ailette de dissipation thermique (240a) disposée sur un côté axial d'un premier roulement (118a), adjacent à la roue (108), de la pluralité de roulements ; et
une seconde ailette de dissipation thermique (140a, 240a) disposée sur un côté axial d'un second roulement (118b), espacé du premier roulement (118a) dans une direction opposée à la roue (108), de la pluralité de roulements,
dans lequel la première ailette de dissipation thermique (140a, 240a) est disposée de manière à être en contact avec une surface latérale aval du premier roulement (118a) sur la base d'une direction d'écoulement d'air, et
la seconde ailette de dissipation thermique (140b, 240b) est disposée de manière à être en contact avec une surface latérale amont du second roulement (118b) sur la base de la direction d'écoulement d'air.

12. Moteur de ventilateur selon la revendication **11,** comprenant en outre un carter entourant le stator et recevant l'arbre de rotation inséré à travers un centre du stator,
dans lequel le carter comprend :
un premier boîtier (100a) dans lequel la roue (108) est reçue ;
un second boîtier (100b) couplé à un côté aval du premier boîtier (100a) sur la base d'une direction d'écoulement de l'air aspiré par la roue (108) ;
un moyeu d'aubes (110) disposé sur un côté aval de la roue (108) sur la base de la direction d'écoulement de l'air ;
une pluralité d'aubes (109) s'étendant de manière à faire saillie depuis une surface circonférentielle extérieure du moyeu d'aubes (110) vers une surface circonférentielle intérieure du premier boîtier (100a) ou du second boîtier (100b) ; et
un troisième boîtier (100c) couplé à un côté aval du moyeu d'aubes (110) sur la base de la direction d'écoulement de l'air et ayant le stator monté à l'intérieur,
dans lequel le troisième boîtier (100c) comprend :
un second logement de roulement (128) s'étendant dans une direction axiale pour entourer le second roulement (118b) ; et
un pont (130) s'étendant dans une direction radiale depuis une surface circonférentielle extérieure du second logement de roulement (128) vers une surface circonférentielle intérieure du troisième boîtier (100c) afin de relier le second logement de roulement (128) et le troisième boîtier (100c),
dans lequel la première ailette de dissipation thermique (140a) est disposée de manière à être reçue à l'intérieur du moyeu d'aubes (110), et
la seconde ailette de dissipation thermique (140b) est disposée de manière à être reçue à l'intérieur du troisième boîtier (100c).

13. Moteur de ventilateur selon la revendication 12, dans lequel le moyeu d'aubes (110) comprend :
une portion de couvercle (111) s'étendant radialement à partir d'une portion d'extrémité axiale du moyeu d'aubes (110) et disposée entre la roue (108) et le premier roulement (118a) ;
un premier logement de roulement (113) faisant saillie axialement depuis un intérieur de la portion de couvercle (111) pour entourer le premier roulement (118a) ; et
une portion de limitation du mouvement axial (129) faisant saillie radialement depuis l'intérieur de la portion de couvercle (111) de manière à être en contact avec une surface latérale amont du premier roulement (118a).

14. Moteur de ventilateur selon l'une quelconque des revendications 11 à 13, dans lequel l'arbre de rotation (117) comprend :
une première partie de support de roulement (117a) pour supporter le premier roulement (118a) ;
une seconde partie de support de roulement (117b) pour supporter le premier roulement (118b) ;
le diamètre de la première partie de support de roulement (117a) est supérieur au diamètre de la seconde partie de support de roulement (117b).
